# EUROPEAN PATENT SPECIFICATION

(11) **EP 3 091 764 B1**
(45) Date of publication and mention of the grant of the patent: **25.10.2017**
(21) Application number: 15166526.2
(22) Date of filing: 06.05.2015
(51) Int. Cl.: H04W 4/24, H04L 12/14, H04M 15/00

(54) **MOBILE DIGITAL CELLULAR TELECOMMUNICATION SYSTEM WITH ADVANCED FLEXIBLE RATING FUNCTIONALITY**
MOBILES DIGITALES ZELLULARES TELEKOMMUNIKATIONSSYSTEM MIT ERWEITERTER FLEXIBLER BEWERTUNGSFUNKTIONALITÄT
SYSTÈME DE TÉLÉCOMMUNICATION CELLULAIRE NUMÉRIQUE MOBILE AVEC UNE FONCTIONNALITÉ DE TARIFICATION FLEXIBLE AVANCÉE

(43) Date of publication of application: 09.11.2016
(73) Proprietor: SAP SE, 69190 Walldorf (DE)
(72) Inventor: Lang, Georg, 69190 Walldorf (DE); Kaufmann, Artur, 69190 Walldorf (DE)
(74) Representative: Richardt Patentanwälte PartG mbB

(56) References cited:
- EP-A1- 1 492 321
- EP-A1- 1 761 021
- US-A1- 2012 084 797

## Description

### Technical field

This invention relates to telecommunications processing systems. In particular, this invention relates to a flexible and efficient real time event driven rating system for determining charge amounts for a diverse array of telecommunications.

### Background

In telecommunications, rating is an activity that determines the cost of chargeable events, such as a cost of service usage, a telephone call, a text message, a data download, a purchase, and the like. Rating may also be performed with regard to other services, such as radio-monitored toll ways, public transit, and the like. Telecommunication access points, turnstiles, and other access points for chargeable events typically generate usage data, in the form of Usage Detail Records (UDR). Examples of UDRs include Call Detail Records (CDR), Event Detail Records (EDR), and Internet Protocol Detail Records (IPDR). UDRs are sent to, or retrieved by, a mediation system that operates between access points and a rating system. The rating system determines the cost of the chargeable events through processing of the UDRs. The cost of the events is then provided to, or retrieved by, an invoicing process.

To date, rating of UDRs and providing rated event data to an invoicing process has been linear in nature. Mediation systems may receive many different types of UDR data. However, mediation systems transform that data into a single format of a single rating system and rated data is output from the single rating system to the invoicing process.

EP 1 761 021 A1 discloses a telecommunications service provider architecture integrating multiple architectures which include prepaid and post-paid processing systems. The convergent enhanced architecture provides performance, scalability, and efficiency consistent with a prepaid architecture and flexibility and configurability consistent with a post-paid system. The convergent architecture provides messaging interfaces between a telecommunications support architecture and a prepaid architecture or a combined rating and billing architecture. The messaging interfaces support message transfer between the processing systems in the architectures to provide information exchange including billing exchanges, rating exchanges, and customer management exchanges.

EP 1 492 321 A1 provides a generic extension module, such as a billing extension module, that can be used to extend a carrier's application's support for real-time billing events. Billing events are triggered around billable operations in the carrier's application, such as the operation to accept a message that was submitted to a server or the operation to deliver a message. The start of an event is triggered before the operation is performed and the end of the event is triggered after the operation is performed. An application can trigger the same event for different operations. Each billing event has associated with it a billing record that has data about the operation and that can be used to charge for the operation that triggered the event. Events can also be linked together if charges are based on the execution of related operations.

US 2012/084797 A1 discloses techniques for rating and committing events in an event processing system. Events can be rated at a rating system according to information that is stored locally on the rating system. Rated events can be stored in a database system with these rated events being utilized to, among other things, restore information that is stored locally on the rating system.

### Summary

Postpaid account is, as understood here, an account of a telecom client/user for which service is provided by a prior arrangement with a telecom operator. The user in this situation is billed after the fact according to his use of telecom services (e.g. mobile phone services) at the end of each month. Typically, the client's contract specifies a limit or "allowance" of minutes, text messages etc., and the customer will be billed at a flat rate for any usage equal to or less than that allowance. Any usage above that limit incurs extra charges. A user in this situation can have no limit on use of telecom services and, as a consequence, unlimited credit.

Prepaid account is, as understood here, an account of a telecom client/user for which credit is purchased in advance of service use. The purchased credit is used to pay for telecom services (e.g. mobile phone services) at the point the service is accessed or consumed. If there is no available credit then access to the requested service is denied by a telecom operator or by mobile phone network. Users are able to top up their credit at any time using a variety of payment mechanisms.

The disclosure generally describes computer-implemented methods, computer-readable media, and mobile digital cellular telecommunication systems for processing transactions such as call detail records (CRDs). The CDRs relate to different resources which are used by customers. The CDRs may have different types, CDRs of one type can comprise descriptions of internet connections established by users via their mobile terminals (e.g. smartphones), CDRs of another type can comprise descriptions of telephone calls made by users, CDRs of yet another type can comprise descriptions of short message services (SMSs) sent by users, and CDRs of further types can comprise descriptions of many other services available to the users in the digital cellular telecommunication networks. The rating of CDRs may be quite complex, it may depend on overall usage of particular resource, or on overall usage of all used resources by a particular user or a group of users resources. On top of this, resource providers may apply loyalty program rules which affect overall billing of the consumed resources at an end of a billing cycle or upon a special rating request to rate a prepaid or a postpaid account. As a result thereof the rating-billing scheme gets quite complex and may demand extra resources. These resources may be quite expensive, because the mobile digital cellular telecommunication system comprise real time event driven systems, which are configured to perform a lot of real time functions such as rating of CDRs and confirm quality of services (QoS) provided to users. Straightforward solution, when all rating/billing functionalities are performed by the real time event driven rating systems may demand an extensive increase in capacity of these systems. On contrary, providing complex rating/billing functionalities by a mobile digital cellular telecommunication system of the present invention is enabled by efficient workload distribution between various components of the system. Functioning of this system can be illustrated on the following example. First a provider contract associated with a particular account is identified. In response to determining that the identified provider contract is associated with a periodic activity, a rating request is created that is associated with the particular account. The created rating request associated with the particular account is added to a queue of consumption items for processing, so that the created rating request, when processed, triggers an action corresponding to the determined periodic activity at an external system.

It is an objective of embodiments of the invention to provide for a system configured to provide effective and flexible real time rating of CDRs, a computer-implemented method for effective real time rating of CDRs, and a computer readable medium having stored thereon a computer executable program code for providing effective real time rating of CDRs. Advantageous embodiments are described in the dependent claims.

According to one embodiment, the present invention relates to a mobile digital cellular telecommunication system comprising a network component configured to generate call detail records (CDRs), a real time event driven rating system, and a batch processing system. The real time event driven rating system comprises a rating component having an interface for inputting the CDRs and is configured for rating an inputted CDR. The real time event driven rating system is configured in response to receiving of a CDR from the network component for a telecommunication service provided to a user to perform the following steps if the received CDR is related to a prepaid account of the user: inputting the received CDR into the rating component for determining a charge amount for the received CDR, adding to the received CDR the determined charge amount, after the adding to the received CDR the determined charge amount forwarding the received CDR to the batch processing system, and charging the prepaid account by the charge amount. The real time event driven rating system is further configured in response to receiving of a CDR from the network component for a telecommunication service provided to a user to perform the following step if the received CDR is related to a postpaid account of the user: forwarding the received CDR to the batch processing system. The batch processing system is configured to perform the following steps: receiving the forwarded CDR and storing the received CDR in a database. The batch processing system is further configured to perform the following steps in response to receiving a rating request to rate the prepaid account in the time interval specified in the rating request: querying the database for retrieval of CDRs related to the prepaid account and their respective charge amounts which were received in said time interval, calculate a preliminary overall charge amount of the retrieved CDRs related to the prepaid account, modify the retrieved CDRs related to the prepaid account according to rating rules related to the prepaid account, generating an event record related to the prepaid account, the event record related to the prepaid account comprising the modified CDRs related to the prepaid account and the preliminary overall charge amount, and sending the event record related to the prepaid account to the real time event driven rating system. The real time event driven rating system is further configured to perform the following steps in response to receiving the event record related to the prepaid account from the batch processing system: inputting the modified CDRs comprised in the received event record related to the prepaid account into the rating component for determining a final overall charge amount for the modified CDRs comprised in the event record related to the prepaid account, updating a remaining credit of an account balance of the prepaid account according to a difference between the preliminary and the final overall charge amount, and sending a billing message related to the prepaid account to the batch processing system comprising the final overall charge amount.

According to another embodiment, the present invention relates to a computer-implemented method for processing of CDRs in mobile digital cellular telecommunication system comprising a network component configured to generate call detail records (CDRs), a real time event driven rating system, and a batch processing system. The real time event driven rating system comprises a rating component having an interface for inputting the CDRs and is configured for rating an inputted CDR. The real time event driven rating system is configured to perform the following steps of the method in response to receiving of a CDR from the network component for a telecommunication service provided to a user to perform: inputting the received CDR into the rating component for determining a charge amount for the received CDR, adding to the received CDR the determined charge amount, after the adding to the received CDR the determined charge amount forwarding the received CDR to the batch processing system, and charging the prepaid account by the charge amount. The real time event driven rating system is further configured in response to receiving of a CDR from the network component for a telecommunication service provided to a user to perform the following step of the method if the received CDR is related to a postpaid account of the user: forwarding the received CDR to the batch processing system. The batch processing system is configured to perform the following steps of the method: receiving the forwarded CDR and storing the received CDR in a database. The batch processing system is further configured to perform the following steps of the method in response to receiving a rating request to rate the prepaid account in the time interval specified in the rating request: querying the database for retrieval of CDRs related to the prepaid account and their respective charge amounts which were received in said time interval, calculate a preliminary overall charge amount of the retrieved CDRs related to the prepaid account, modify the retrieved CDRs related to the prepaid account according to rating rules related to the prepaid account, generating an event record related to the prepaid account, the event record related to the prepaid account comprising the modified CDRs related to the prepaid account and the preliminary overall charge amount, and sending the event record related to the prepaid account to the real time event driven rating system. The real time event driven rating system is further configured to perform the following steps of the method in response to receiving the event record related to the prepaid account from the batch processing system: inputting the modified CDRs comprised in the received event record related to the prepaid account into the rating component for determining a final overall charge amount for the modified CDRs comprised in the event record related to the prepaid account, updating a remaining credit of an account balance of the prepaid account according to a difference between the preliminary and the final overall charge amount, and sending a billing message related to the prepaid account to the batch processing system comprising the final overall charge amount.

According to another embodiment, the present invention relates to a computer readable medium having stored thereon a computer executable code for execution by computer processors controlling a mobile digital cellular telecommunication system, wherein execution of the instructions of the executable code causes the computer processors to execute the computer-implemented of the aforementioned embodiment.

This way of configuring of the mobile digital cellular telecommunication system enables to optimize the workload of the real time event driven rating system. The rating of CDRs related to prepaid accounts is performed in real time, while rating of CDRs related to postpaid forwarded to the batch processing system for further processing. This configuration has another advantageous functionality; it enables flexible rerating of the postpaid accounts. For instance, if a user having a prepaid account has sent 3 SMS and the provider to decides to apply a discount and charge only 2 SMS, the user account will be rerated and the costs of one charge free SMS will be refunded.

According to another embodiment of the present invention, the real time event driven rating system is further being configured to perform the following steps at an end of a billing cycle of the postpaid account: querying the database for retrieval of CDRs related to the postpaid ac-count received during the billing cycle, modifying the retrieved CDRs related to the postpaid account according to rating rules related to the postpaid account, generating an event record related to the postpaid, the event record comprising the modified CDRs related to the postpaid account, and sending the event record related to the postpaid account to the real time event driven rating system. The real time event driven rating system is being further configured to perform the following steps in response to receiving the event record related to the postpaid account from the batch processing system: inputting the modified CDRs comprised in the received event record related to the postpaid account into the rating component for determining an overall charge amount for CDRs comprised in the event record, and sending a billing message related to the prepaid account to the batch processing system comprising the overall charge amount.

This functionality enables optimization of a workload of the real time event driven rating system. It determines an overall charge amount related to the postpaid account only at the end of the billing cycle instead of generating a charge amount for each received CDR. Moreover providers can apply different rating rules (e.g. discounts) at the end of the billing cycle by modifying CDRs which were accumulated in the database during the billing cycle.

According to another embodiment the real time event driven rating system is further being configured to perform the following steps in response to the receiving of the CDR from the network component for the telecommunication service provided to the user if the received CDR is related to the prepaid account of the user and the remaining credit of the account balance of the prepaid account is below a first threshold: generating an interruption message for interruption of the telecommunication service, and sending the interruption message to the network component.

According to another embodiment the real time event driven rating system is further being configured to perform the following steps in response to the receiving of the CDR from the network component for the telecommunication service provided to the user if a quality of service (QoS) of the telecommunication service depends on a history of usage of the telecommunication service by the user: extracting usage information from the received CDR, updating one or more counters by using the extracted usage information, the one or more counters being indicative of the history of usage of the telecommunication service, generating a QoS message in accordance with information stored in the one or more counters, and sending the QoS message to the network component. The batch processing system is being further configured to perform the following step at the end of the billing cycle of the postpaid account or in response to the receiving the rating request to rate the prepaid account: sending a reset counter message to the real time event driven rating system. The real time event driven rating system is further being configured to perform the following steps: receiving the reset counter message; in response to the receiving of the reset counter message resetting the one or more counters.

These features further specify a work load sharing between the batch processing system and the real time event driven rating system. Only information being needed for real time support of QoS functionality by the real time event driven rating system is extracted from CDRs and stored in counters of the real time event driven rating system. These counters related to postpaid accounts are reset at the end of the billing cycles of the postpaid accounts. This may be illustrated on a simple example. The user may be allowed to send only 3 SMS per billing cycle. If the user wants to send more than 3 SMS during one of the billing cycles, those requests are blocked. In order to support this real time functionality the real time event driven rating system needs a counter for SMS, which is being reset after each of the billing cycles or after requests to rerate the prepaid account. Moreover the functionality of event generator to signal the end of the billing cycle is transferred to the batch processing system, as a result thereof the workload of the real time event driven rating system is reduced.

According to another embodiment of the present invention, the batch processing system is further configured to perform the step of monitoring a volume of data transmitted per time unit from the real time event driven rating system to the batch processing system, wherein the data comprises the forwarded CDRs, wherein the sending of the event record related to the postpaid account to the real time event driven rating system is performed when the volume of the data transmitted per time unit is below a second threshold value, wherein the sending of the event record related to the prepaid account to the real time event driven rating system is performed when the volume of the data transmitted per time unit is below a third threshold value.

This feature enables to monitor a workload of the real time event driven rating system and to send to it the event record when its load is low. The data volume transmitted per unit time can be measured for instance in megabit per second.

According to another embodiment of the present invention, the real time event driven rating system is further configured to perform the following steps in response to the receiving of the CDR from the network component for the telecommunication service provided to the user if a quality of service (QoS) of the telecommunication service depends on a history of usage of the telecommunication service by the user: extracting usage information from the received CDR; updating one or more counters by using the extracted usage information; generating a QoS message in accordance with information stored in the one or more counters; and sending the QoS message to the network component, wherein the one or more counters being indicative of the history of usage of the telecommunication service. The real time event driven rating system is further configured to perform the following step in response to receiving the event record from the batch processing system: resetting the one or more counters.

According to another embodiment of the present invention, the modifying of the retrieved CDRs related to the prepaid account according to the rating rules related to the prepaid account comprises the following steps: identifying CDRs the retrieved CDRs of the same type related to the prepaid account, and generating one aggregate CDR for all of the identified CDRs related to the prepaid account according to a least one of the rating rules related to the prepaid account, wherein the aggregate CDR is one of the modified CDRs related to the prepaid account.

According to another embodiment of the present invention, the modifying of the retrieved CDRs related to the postpaid account according to the rating rules related to the post account comprises the following steps: identifying CDRs the retrieved CDRs of the same type related to the postpaid account, and generating another one aggregate CDR for all of the identified CDRs related to the postpaid account according to a least one of the rating rules related to the postpaid account, wherein the another one aggregate CDR is one of the modified CDRs related to the postpaid account.

This way of aggregation of CDRs of one type reduces the workload of the real time event driven rating system. For instance, instead of determining of charge amounts for each of 3 CDRs related to sending an SMS, the real time event driven rating system will determine a charge amount for one CDR related to sending 3 SMS.

According to another embodiment of the present invention, the mobile digital cellular telecommunication system further comprises a database server for storing prepaid accounts and postpaid accounts. Each of some of the postpaid accounts comprises a respective services list of telecommunication services to be provided by one or more network components to a user having the each of some of the postpaid accounts, a respective rating information and rules for determining charge amounts for CDRs generated in relation to using the telecommunication services of the services list of the each of some of the postpaid accounts, a respective billing cycle information determining a schedule of the billing cycles of the each of some of the postpaid accounts. Each of some of the prepaid accounts comprises a respective services list of telecommunication services to be provided by one or more network components to a user having the each of some of the prepaid accounts and a respective rating information and rules for determining charge amounts for CDRs generated in relation to using the telecommunication services of the services list of the each of some of the postpaid accounts. The database server is configured to perform the steps of: sending the services list to the respective one or more network components, sending the rating information to the respective the real time event driven rating system, sending the billing cycle information and the rating rules to the batch processing system, and sending the rating request to rate the prepaid account. The network component is configured to perform the steps of: receiving the services list from the database server, storing the received services list, and providing the services of the received list to a user having either the postpaid or the prepaid account comprising the stored services list. The real time event driven rating system is further configured to perform the steps of: receiving the rating information from the database server, storing the received rating information, wherein the rating component is configured for rating the inputted CDR according to the stored rating information. The batch processing system is further configured to perform the steps of: receiving the billing cycle information and the rating rules from the database server, receiving rating request to rate the prepaid account, and storing the received billing cycle information and the received rating rules.

This way of distribution of account information supports optimum distribution of the workload between different components of the mobile digital cellular telecommunication system. Only account information relevant for operation of a particular component is distributed to it by the database server, i.e. no redundant information is stored. As a result thereof the data protection is increased. Moreover, since there is only one center component for distribution of information, it is very easy to perform updates of account information. First, the account information is updated on the database server, afterwards the relevant updates are distributed to the components of the mobile digital cellular telecommunication system.

According to another embodiment of the present invention, the mobile digital cellular telecommunication system further comprise further real time event driven rating systems, wherein the network component is configured to send the CDRs to the real time event driven rating system, which data communicative coupling to the network component has the lowest data transfer latency in comparison with any other real time event driven rating system, wherein a data transfer latency of a data communicative coupling between the batch processing system and the real time event driven rating system, to which the network component is configured to send CDRs, is higher than the data transfer latency of the data communicative coupling used for the sending of the CDRs.

This architecture enables the fasted network connection between the network component and the real time event driven system rating system, because these two units in contrast to the others have to provide real time services.

The details of one or more implementations of the subject matter of this specification are set forth in the accompanying drawings and the description below. Other features, aspects, and advantages of the subject matter will become apparent from the description, the drawings, and the claims.

### Figures

### DESCRIPTION OF DRAWINGS

FIG. 1 is a block diagram illustrating an example block diagram of a system landscape.
FIG. 2 shows an illustration of database tables and relations there between.
FIG. 3 shows a block flow diagram.
FIG. 4 shows is a block diagram of a computing device.
Fig. 5. shows is a block diagram illustrating an example environment for processing CDRs.

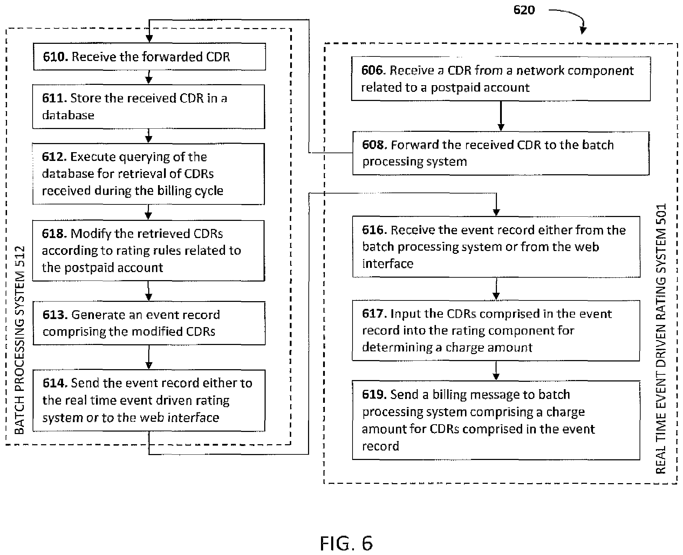

Fig. 6. shows a block flow diagram.
Fig. 7 shows a block flow diagram.
Fig. 8 shows a block flow diagram.

### Detailed description

Various embodiments herein each include at least one of systems, methods, and software that operate to provide flexible event data rating solutions. Some such solutions include embodiments that allow for an invoicing system, such as the Convergent Invoicing product available from SAP AG of Waldorf, Germany, to receive and process data from one to many different rating system instances and types procured from multiple vendors or as may have been custom developed. An example of such a rating system is the Convergent Charging system, also available form SAP AG. Some such embodiments including multiple rating system allow application of flexible rules to determine which event transactions are to be rated by which rating systems and when certain event transactions are to be rated or rerated.

These solutions are very well adapted to service modern service providers, such as telecommunications service providers, that have seen considerable consolidation in recent years while also expanding their service offerings beyond landline-based telephone service and into wireless voice and data service, wired and wireless internet service, sales of media, and mobile payments, among others. For example, each entity that has been consolidated into a single company may have a legacy rating system for each of several service offerings. Additionally, each service offering may have its own rating system. The various solutions of the illustrated and described embodiments herein bring great flexibility to service providers to generate timely billing information.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

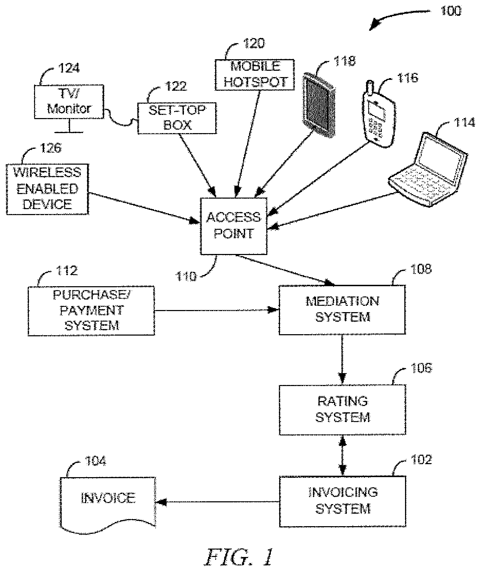

FIG. 1 is a block diagram of a system landscape 100, according to an example embodiment. The system landscape 100 is an example of a computing environment within which some embodiments may be implemented.

The system landscape 100 includes several devices that connect to an access point 110 to access services that generates Usage Detail Records (UDR) based on chargeable access events. The several devices include personal computers 114, smartphones 116, tables 118, mobile hotspots 120, set-top boxes 122, other wireless enabled devices 126, and other devices connectable to an access point 110. Although only a single access point 110 is illustrated, many access points 110 are typically present in various embodiments. The access point 110 may be one or more of a wireless telephone and data access point, a wired or wireless data network access point, a router, a hub, or other network-enabled device capable of generating UDRs.

As one of the several devices utilizes the access point 110, a chargeable event transpires. Details of the event are captured, such as account identifying information, a location calling from, a time and duration of a call, a number called, an amount of data sent, an amount of data received, a number of messages sent and received, a resource accessed, a cost of premium content, cost of physical items purchased, and the like. This captured data is then written to a UDR. The UDR may be stored by the access point 110 and retrieved by a mediation system 108, immediately transmitted via a network to the mediation system 108, written to a network storage location from which the mediation system 108 may retrieve the UDR, and other such arrangements.

The mediation system 108 is a system that converts UDRs to a defined format that can be imported and processed by a rating system 106. The mediation system 108, although referred to as a system, may be module, a process, a web service, or other data processing element, in various embodiments. Additionally, some embodiments may include more than one mediation system 108.

In some embodiments, the mediation system 108 may also receive or retrieve UDRs from one or more other systems, such as a purchase or payment system 112. The purchase or payment system 112, in some embodiments, may be a system of an entity authorized to bill for one or both of services and products via an invoicing system 102 of the system landscape 100. For example, a user may tie one or more other services, such as television services provided by a third party, public transit usage, toll way usage, and the like with an account invoiced or paid through the invoicing system 102.

The mediation system 108 may receive or retrieve UDRs, convert the UDRs into the defined format, and provide the UDRs in the defined format to one or both of a rating system 106 and an invoicing system 102. The mediation system 108, in various embodiments, may transmit the converted UDRs to one or both of the rating system 106 and invoicing system 102, store the converted UDRs for retrieval thereby, store the converted UDRs for a period and then transmit them thereto, and the like.

The rating system 106 performs rating activities with regard to converted UDRs that include representations and details of chargeable events, such as a cost of service usage, a telephone call, a text message, a data download, a purchase, and the like. The rating system 106 includes representations of billing terms for accounts, purchased items and services, and the like, such as may be defined in a customer account contract, terms of service, or pricing of an item or service. In some embodiments, each UDR is processed to identify applicable billing terms, which may be determined based an account identifying data included in the UDR in view of a database storing records associating accounts to contracts and contracts to billing terms. Based on the billing terms, the chargeable event of the UDR is rated and rating data is generated base thereon. The rating data generated from a UDR may be referred to as a consumption item and generally includes account identifying data, data defining an event with regard to the respective account, and a cost element. Note that chargeable events represented in a UDR, when rated and forming a consumption item, may not result in a cost element great than zero (0) or the cost element may be omitted. For example, a contract associated with an account may include unlimited or included amounts of certain usage, such as text messages, data, calling minutes, public transit usage, and the like. In such instances, the rated cost element may be zero. However, in some embodiments, the UDR and consumption item may simply be discarded.

The rating system 106, although illustrated as a single system, may instead be two or more rating systems 106. Each of the plurality of rating systems 106 may be different rating systems, such as may be procured from different software vendors or custom developed. As mentioned above, an example of a rating system 106, in some embodiments, is the Convergent Charging rating system available from SAP AG, of Walldorf, Germany.

The rating system 106, or plurality of rating systems 106, generally include four basic functions: 1) UDR data in; 2) rating; 3) rating data output (e.g., consumption items); and 4) providing the consumption items, and unrated UDRs in some embodiments, to an invoicing system 102. The first basic function, UDR data in generally operates to receive or retrieve converted UDR data from the mediation system 108. The first basic function may then store the UDR data in a queue until the second basic function, rating, reaches the UDR data, or a call of the rating function may be made. In some embodiments, the first basic function may also place a copy of the converted UDR data in a queue of the fourth basic function to provide the copy of the converted UDR data to the invoicing system 102.

The second basic function, rating, operates as discussed above with regard to perform rating activities to generate consumption items. However, the second basic function, rating, may be exposed via an application programming interface (API), a web service, a remote function, and the like. Exposing the second basic function allows the rating to be called by processes of the invoicing system 102. The rating may be called by processes of the invoicing system 102 to rate UDR data that was not rated, was improperly rated and is to be rerated, is to be rerated due to contract or legal changes, or otherwise is to be rerated as may be determined by the invoicing system102 or as specified by an administrator or service agent.

The invoicing system 102 receives or retrieves one or both of the consumption items and converted UDR data from the rating system 106. In embodiments where there are multiple rating systems 106, the invoicing system receives or retrieves one or both of the consumption items and converted UDR data from the plurality of rating system 106.

Generally, the invoicing system 102, or a larger system such as an Enterprise Resource Planning (ERP) system or Customer Relationship Management (CRM) system of which the invoicing system 102 is a part, includes configuration information logically defining each of the one or more rating system 106 therein. The configuration information also typically includes network connectivity data for use in connecting with each of the one or more rating systems 106 via a network. Additional configuration information may designate a periodic schedule for when data is to be retrieved or received from the rating system(s) 106.

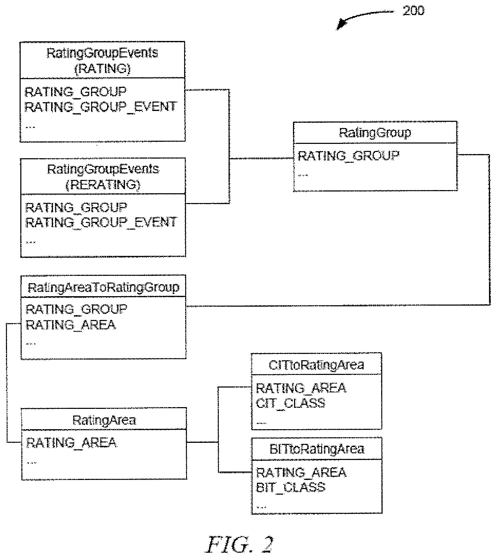

The invoicing system 102 also includes configuration information. The configuration information of the invoicing system 102 identifies consumption item classes and billable item classes of the invoicing system 102 for handling and storing one or both of consumption item and UDR data received from the rating system(s) 106 and billable items generated therefrom. Note that a consumption item, once billed or processed for billing, becomes a billable item and may be stored distinctly and with the same, less, or additional data based on the processing of the particular embodiment. The configuration information of the invoicing system 102 also includes data defining relations between received consumption items and a pricing structure, referred to as a rating area, such as may be defined in customer contracts, customer agreements, and other pricing structures. The configuration information of the invoicing system 102 additionally includes information associating one or more rating areas to each to one or more rating groups. An illustration of this configuration information and relations there between, according to some embodiment, is included in the FIG. 2 illustration of database tables 200 and relations.

Continuing with FIG. 2, also illustrated are associations of rating group events and rerating rating group events. This configuration information assigns executable code, modules, or services to a rating group. In the event consumption item, billable item, or UDR data stored of a rating group is to be rated or rerated after receipt by the invoicing system 102, the appropriate rating or rerating group events are identified based on data associations as represented between the database tables of FIG. 2. In some embodiments, the rating and rerating group events provide processing branches that may be customized to perform processing during rating and rerating and define technical data processing activities that will be carried out during rating and rerating of consumption and billable items. These technical data processing activities may include calls to one or more functions of objects, methods, processes, other systems, web services, and the like. These calls may be added to the rating and rerating events that are to be performed in certain sequences, such as before, in concert with, and after rating or rerating data processing activities are performed, such as through one or more calls of the rating basic functions of one or more rating systems 106.

For example, in some embodiments, when a billable item is to be rerated, there may be three defined events: 1) before rerating; 2) the rerating itself; and 3) after rerating. For the before rerating event, the event may include a function call to lock a billable item class instance or data record that stores the billable item to be rerated. Next, the rerating may be performed by retrieving data of the billable item from the billable item class instance or data record that is to be rerated and calling a rating function of the proper rating system 106 by including at least a portion of the retrieved data in the call. In response thereto, the rating system 106 will provide the rerated data in the form of a consumption item. The after rerating event will the received consumption item data to generate billable item data, update the billable item class instance or data record, and unlock the billable item class instance or data record. The same or similar events may also be defined for rating of rating group events. Note that when a rating system 106 is to be called, the proper rating system 106 to call is identifiable through data stored in the database tables 200 of FIG. 2 as the rating group of the called events as stored in the RatingGroup table stores such data. Additionally, when calling the rating function of the rating system 106, if an identifier of a contract, customer agreement, or the like is need to determine how the billable item or consumption item is to be rated, that data can be obtained from the RatingArea table which stores such data.

Returning now to FIG. 1, once all data that is in need of rating or rerating has been processed, data can be output by the invoicing system 102 in form of an invoice to be sent to subscriber or other customer. However, in other embodiments, the invoicing system 102 may be configured to generate daily usage reports with regard to billing, such as a customer of a wireless telephone and data company may desire to see prior to the end of a billing cycle to monitor usage. In such instances, the billable item data may be stored as a web page view or as data in billable item class instances or data records stored in a database that may be retrieved for presentation in a webpage or app view or as may be provide via an interactive voice response system.

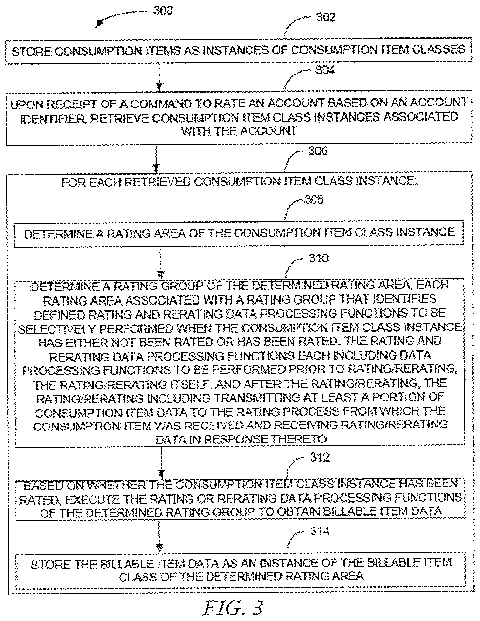

FIG. 3 is a block flow diagram, according to an example embodiment. The method 300 is an example of a method that may be performed by an invoicing system or a module of another data processing system that is involved in a billing process.

The example method 300 includes storing 302 consumption items as instances of consumption item classes. Each consumption item typically includes an account identifier and data defining an event with regard to the respective account. In some embodiments, the data defining the event included in each consumption item defines a billable event, such as a placed call, with regard to the identified account and includes a billable amount and billable event detail.

The consumption items, in some embodiments, are each stored 302 as a consumption item class instance determined based upon a rating process from which the consumption item was received. As such, a number of consumption item classes that exists within a system implementing the method 300 will typically be at least equal to a number of rating processes, or systems, from which the system is configured to receive consumption item data. In some embodiments, the instances of the consumption item classes are each stored as at least one record in at least one database table. In other embodiments, the instances of consumption item classes may each be stored as data files, as rows of one or more data files, and other data structures.

The method 300, upon receipt of a command to rate an account based on an account identifier, may then retrieve 304 consumption item class instances associated with the account. A command to rate an account may be received as part of a billing cycle closing process to generate an invoice with regard to customer accounts. In other embodiments, the command may be received upon an attempt of a wireless service subscribe to initiate a call or at the end of a call, such as when the wireless service subscriber is on a prepay customer. In some other instances, the command may be received in response to a customer requesting account balance information via a web page, a mobile device app, or via an interactive voice response system.

In another embodiment, each consumption item class instance may include date data of a date on which the event occurred, which may be an actual date of the event or a date on which the consumption data was received by an invoicing system or module performing the method. The rating command in such instances may be received with a date element identifying consumption items to be rated, such as past 30 days, current month, a date range, since a last bill, and the like. In such embodiments, the consumption item class instances may be retrieved as a function of this date element included with the received command.

Regardless of why or how the command to rate an account is received, for each 306 retrieved 304 consumption item class instance, the method 300 may first determine 308 a rating area of the consumption item class instance. This may be determined 308, in some embodiments, by querying one or more database tables, such as is illustrated and described with regard to FIG. 2, that store configuration data. For example, in the stored data, each consumption item class may be associated with a rating area that identifies a rating process from which consumption items stored as consumption item class instances are received. Similarly, the stored data may also include a billable item class associated with the rating area and an instance of such a billable item class stores billable item data output by rating and rerating data processing functions.

Additionally, the method 300 includes determining 310 a rating group of the determined 308 rating area. Again, this may be determined 310 in some embodiments by querying one or more of the database tables illustrated and described with regard to FIG. 2 that store configuration data. For example, in the stored data, each rating area is associated with a rating group that identifies defined rating and rerating data processing functions, or events, to be selectively performed when the consumption item class instance has either not been rated or has been rated. In such embodiments, the rating and rerating data processing functions may each include data processing functions to be performed prior to rating/rerating, the rating/rerating itself, and after the rating/rerating. The rating/rerating may include transmitting at least a portion of consumption item data to the rating process from which the consumption item was received and receiving rating/rerating data in response thereto.

The method 300 also includes, based on a determination of whether the consumption item class instance has been previously rated, executing 312 the rating or rerating data processing functions of the determined rating group to obtain billable item data. The method 300 may then store 314 the billable item data as an instance of the billable item class of the determined rating area.

As mentioned above, the stored data may also include billable item class instance that store billable item data output by rating and rerating data processing functions. Data of the billable item class instances is consumed by an invoicing process that is executable to generate an invoice with regard to accounts identified in consumption item and billable item class instances. In such embodiments, the command to rate an account based on an account identifier may be received from such an invoicing process.

In some embodiments, upon receipt of the command to rate an account based on an account identifier, the method 300 further includes retrieving billable item class instances associated with the account. In such embodiments, for each retrieved billable item class instance, the method 300 includes determining a rating area of the billable item class instance and determining a rating group of the determined rating area. Such determinations may be made, for example, through queries of database tables 200 as illustrated in FIG. 2. Subsequently, based on whether the billable item class instance has been rated, such embodiments may then execute the rating or rerating data processing functions of the determined rating group to obtain billable item data and the billable item class instance may be updated with the billable item data.

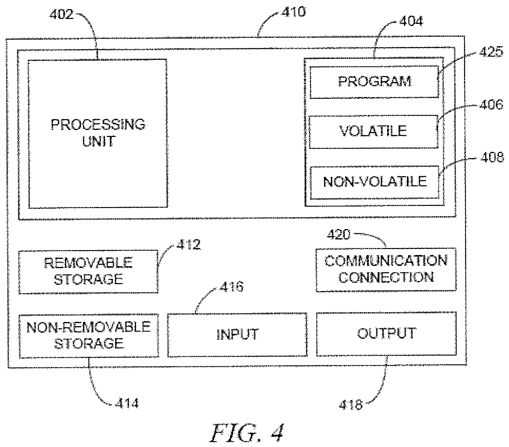

FIG. 4 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example computing device in the form of a computer 410, may include a processing unit 402, memory 404, removable storage 412, and non-removable storage 414. Although the example computing device is illustrated and described as computer 410, the computing device may be in different forms in different embodiments. For example, the computing device may instead be a smartphone, a tablet, or other computing device including the same or similar elements as illustrated and described with regard to FIG. 4. Further, although the various data storage elements are illustrated as part of the computer 410, the storage may also or alternatively include cloud-based storage accessible via a network, such as the Internet.

Returning to the computer 410, memory 404 may include volatile memory 406 and non-volatile memory 408. Computer 410 may include - or have access to a computing environment that includes a variety of computer-readable media, such as volatile memory 406 and non-volatile memory 408, removable storage 412 and non-removable storage 414. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 410 may include or have access to a computing environment that includes input 416, output 418, and a communication connection 420. The input 416 may include one or more of a touchscreen, touchpad, mouse, keyboard, camera, and other input devices. The computer may operate in a networked environment using a communication connection 420 to connect to one or more remote computers, such as database servers, web servers, and other computing device. An example remote computer may include a personal computer (PC), server, router, network PC, a peer device or other common network node, or the like. The communication connection 420 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 402 of the computer 410. A hard drive (magnetic disk or solid state), CD-ROM, and RAM are some examples of articles including a non-transitory computer-readable medium. For example, various computer programs 425 or apps, such as one or more applications and modules implementing one or more of the methods illustrated and described herein or an app or application that executes on a mobile device or is accessible via a web browser, may be stored on a non-transitory computer-readable medium.

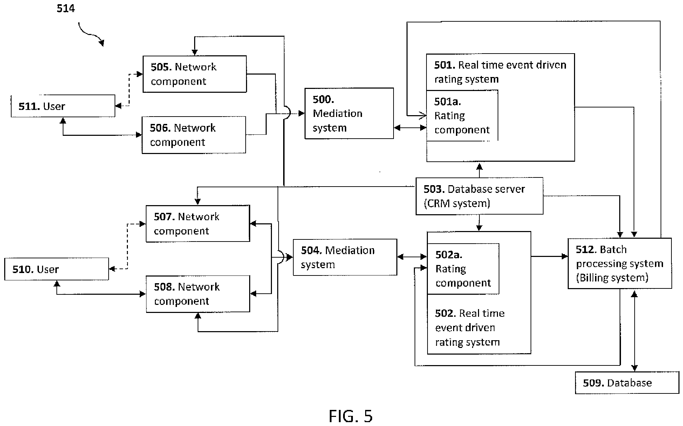

Fig. 5. is a block diagram illustrating an example environment for processing CDRs. This environment can be implemented as a mobile digital cellular telecommunication system. It comprises network components 505-508 configured to provide various digital cellular telecommunication connections (3G, 4G, GRPS, GSM, etc.) to the users 511 and 510. The network components can be a plurality of base stations dispersed throughout the service coverage area in order to support a network infrastructure of the cellular digital telecommunication network. The users can access to and use different services via these network components, for instance they can make phone calls, send SMS, establish internet connections and use various internet services via the established internet connections. The network components are further configured to generate CDRs related to the usage of services and send them to respective rating components 502a and 501a of the real time event driven rating systems 501 and 502. These CDRs can be sent via respective mediation systems 500 and 504. The mediation systems perform real time conversion of CDRs generated in different formats by different systems in a standard machine parsable format, which can be processed by the real time event driven rating systems. The rating systems 501 and 502 have respective rating components 501a and 502a which have interfaces for inputting the CDRs and being configured for rating an inputted CDR, wherein the rating comprises determining a charge amount for the inputted CDR. The rating systems are configured to: send the determined charge amounts, to forward the inputted CDRs to a batch processing system 512, to charge user accounts with the determined charge amounts, to update account balances of user accounts when performing rerating of previously rated CDRs, add the determined charge amount to the inputted CDR and afterwards to send the modified CDR to the batch processing system 512. CRDs can be forwarded to the batch processing system without any modification, or they can be modified in a way that only information needed for determination of charging such as customer identification and specification of resource usage are left in the CRDs. The rating system can be further configured to register and manage history of usage of particular resources by users. For instance, one of the users has an internet traffic limit of 1 GB per month. In this case the rating system will use a counter of data volume used by the user and send Quality of Service (QoS) messages regarding the allowed QoS to the network components. For instance if data volume is below the limit of 1 GB, then the rating system will send to the network component a QoS message confirming that internet connection can be provided, otherwise the rating system will send to the network component a QoS message indicating that internet connection has to be denied.

Batch processing system is configured to store non-rated CDRs, rated CDRs, charge amounts of rated CDRs, and other information in a database 509. It is further configured to: send sets of unrated CDRs to the rating component of the rating system for (batch) rating and to send sets of rated CDRs to the rating component of the rating system for rerating. For instance, this can be done when the workload of the rating system is low, or a set of CDRs can be sent at an end of a billing cycle of a postpaid account related to the set. Yet another option is to send a set of rated CDRs to the real time event driven real time rating system after request for rerating is received from the service provider.

The amount of forwarded unrated CDRs from the real time event driven rating system to the batch processing system per time unit time (e.g. second) may be used as an indicative workload parameter of the workload of the real time event driven rating system. The workload of the real time event driven rating system can be considered low, when the workload parameter is below a threshold value. Batch processing system can function as a billing system, i.e. it summarizes charge amounts and generates bills for users on a basis of the summarized charge amounts.

The batch processing system can perform aggregating of CDRs for facilitating of their processing and/or apply special rules for aggregating. The aggregation can be performed according to the types of CDRs. For instance, CDRs of one type can be related to SMS sent by the user, CDRs of another type can be related to data volume downloaded during internet sessions, CDRs of yet another type can be related to duration of telephone calls. Thus instead of forwarding 5 CDRs related to one SMS each, it is more practical to substitute these 5 CDRs by one aggregate CDR related to 5 SMS. The CDRs related to data volume downloaded during internet sessions can be substituted by one aggregate CDR related to overall data volume downloaded during all internet sessions. The CDRs related to phone calls can be substituted by one aggregate CDR related to one phone call being as long all of the phone calls in the CDRs related to the phone calls. Moreover the batch processing system can have another remarkable functionality. Service providers can apply different rating rules for processing /aggregating of CDRs. For instance, if one of the providers wants to make a promotion of a bonus discount for some of his services used by the users, the provider can simply modify the CDRs retrieved from the database 509. In a case when providers want to make a first minute of any telephone call free of charge, than they can request the batch processing system to reduce duration of phone calls in CDRs related to the phone calls by one minute. This reduction of the duration of the phone calls may be dependent of the area where the phone calls are made. In the other words service providers can apply various rules of customer loyalty programs based on actual consumption sate by analyzing and or modifying the non-charged and charged CDRs being forwarded from the batch processing system to the rating system without reprogramming of the rating systems. In addition, when the user account is already charged, the batch processing system can upon request of provider, retrieve the charged CDRs, aggregate/modify them according to the new rating rules, and send them for rerating to the real time event driven rating system. In its own turn the real time event driven rating system will determine the overall charge amount for the modified CDRs and update the user account balance accordingly. Monitoring of the workload of the real time event driven rating system and sending the processed CDRs for rating or rerating when the workload is below a threshold value can be performed by the batch processing system. The monitoring of the workload is described above.

This way of batch processing of CDRs has a number of distinct advantages. First of all CDRs of one type can be aggregated, and as a result thereof the rating of aggregate CDRs instead of big numbed discrete CDRs requires less resources of the rating systems 501 and 502. Second, the rating can be adapted in numerous indirect ways by programming the batch processing system. This way of flexible adapting of rating is much better when compared with direct reprogramming of rating components which is very resource consuming because they operate in real time round the clock. The following protocols can be used for data communication (e.g. send/receive event record) between the batch processing system 512 and the real time event driven rating systems 501 and 502: Simple Object Access protocol (SOAP), or Diameter protocol, or File Transfer Protocol (FTP). The communicated data can be in one of the following formats: Comma Separated Values (CSV), Extensible Markup Language (XML), or Excel Microsoft Office Open XML Format Spreadsheet file (XLSX).

In order to perform the functionalities described above the batch processing system can be configured to execute the following steps in response to receiving a rating request to rerate the prepaid account in the time interval specified in the rating request: querying the database for retrieval of CDRs related to the prepaid account and their respective charge amounts which were received in said time interval, calculate a preliminary overall charge amount of the retrieved CDRs related to the prepaid account, modify the retrieved CDRs related to the prepaid account according to rating rules related to the prepaid account, generating an event record related to the prepaid account, the event record related to the prepaid account comprising the modified CDRs related to the prepaid account and the preliminary overall charge amount, and sending the event record related to the prepaid account to the real time event driven rating system. Modifying of CDRs can be done in various ways as described above, e.g. aggregating CDRs of the same type in one aggregate CDR, and/or modifying specifications of the resource usage in the aggregate CDR or in the retrieved CDRs.

The database server 503 (or customer resource management system) distributes details of user accounts between different components of the system 514. For instance, a postpaid account of one of the users can comprises a service list of telecommunication services to be provided by one or more network components to said user, a respective rating information and rating rules for determining charge amounts for CDRs generated in relation to using the telecommunication services of the services list, a respective billing cycle information determining schedule of the billing cycles for said user. In contrast to postpaid account a prepaid account does not have any billing cycle. Services (or at least some of them) are provided to the user of the prepaid account until the prepaid account has sufficient credit or a remaining credit of the account balance of the prepaid account is above a threshold. The prepaid account can comprise a services list of telecommunication services to be provided by one or more network components to a user having the prepaid account, rating information and rating rules for determining charge amounts for CDRs generated in relation to using the telecommunication services of the services list. The rating information can comprise details of allowable QoS for different services depending on the account balance. For instance, incoming calls can be allowed even if the account balance of the prepaid account is below a threshold. Utilization of optimum distribution of account information between different components of the system 514 enables to achieve the following objectives in a synergetic way. First of all, only database server 503 stores complete information about user accounts. It performs data exchange with other components, which has very low volume of data traffic and does not require real-time performance. As a result thereof data exchange along these channels can be very well protected, which is of clear benefit, because customer sensitive information is distributed along these channels. Another advantage is that other data components comprise only fragments of information related to user account. Thus, when information related to user accounts, which is stored on any of system components except the database server 503, is stolen, for instance as a result of a hacker attack, it will comprise only fragments of user accounts. These fragments do not enable restoring complete information of accounts and inflicting serious damage to users. Second, the information of accounts is distributed among the system components on a "need to know" principle, wherein the account information needed for operation of the rating systems is reduced since these are the most heavily loaded components of the system.

The distribution of the account information can be supported by the following functionalities of the system components. The database server is configured to perform the steps of: sending the services list to one or more of the network components, sending the rating information to one or more of the real time event driven rating system, and sending the billing cycle and rating rules information to the batch processing system, and sending the rating request to rate the prepaid account. Each of the network components is configured to perform the steps of: receiving the services list from the database server; storing the received services list; and providing the services of the received list to a user having either the postpaid or the prepaid account comprising the stored services list. The real time event driven rating system is configured to perform the steps of: receiving the rating information from the database server; storing the received rating information, wherein the rating component is configured for rating the inputted CDR according to the stored rating information. The batch processing system is further configured to perform the steps of: receiving the billing cycle information from the database server, storing the received billing cycle information, and receiving the rating request to rate the prepaid account.

The system 514 depicted on Fig. 5 has different requirements for data exchange coupling between its components, because only some of them operate in real time regime. For instance connection between the user and the real time event driven rating system has to operate in real time, because the QoS may depend on account balance of the prepaid account or on the history of usage of resources, for instance a prepaid or postpaid account can be limited to 3 SMS per month. In this case the real time event driven rating system has to monitor counters or other values being indicative of the history of usage of the resource and provide corresponding QoS in real time according to state of these counters or values. In the other words data transfer latency between the user and the respective real time event driven rating system has to be minimized. This can be achieved by selecting a proper chain of components cellular digital telecommunication network. For instance the user 511 can be connected to the digital cellular telecommunication network either via network component 505 (e.g. first base station) or via network component 506 (e.g. second base station), wherein both of them a connected to the rating component 501a via common mediation system. The connection of the user 511 to the particular network component 505 or 506 can be determined by his current geographical location (e.g. different locations within an area, a city, or a province). The same applies to another user 510, who can have connection to the rating system either via network component 507 and mediation system 504 or via network component 508 and mediation system 504. When one of the users takes a long distance trip (e.g. a trip to another country) the real time event driven system rating system (502 or 501) and its periphery (505, 506, 500; or 507, 508, 504) can be changed as well.

On the other hand latency of data transfer between other components of the system 514 is not critical. Thus with independent of geographical location of users the same components 503, 514, 509 can be used.

These requirements can be formulated as follows. If the system 514 comprises more than one real time event driven rating system then the real time event driven rating system, which data communicative coupling to the network component providing connection to the user, has the lowest data transfer latency in comparison with any other real time event driven rating system, is selected. On the other hand a data transfer latency of a the data communicative coupling between the batch processing system and the selected real time event driven rating system is higher than the data transfer latency of the data communicative coupling between the selected real time event driven rating system and the network component providing connection to the user.

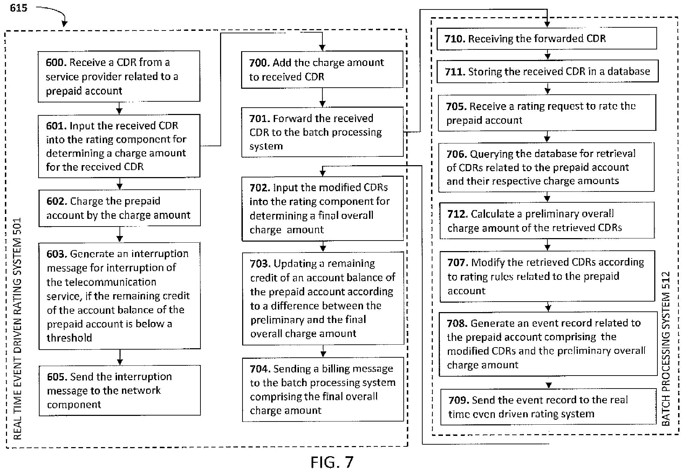

Fig. 7 illustrates a flow chart diagram 620 for a method of processing of CDRs using the system 514.

The flow chart diagram 620 illustrates processing of a CRD related to a post-paid account. In a process block 606 a CDR related to a usage of a service by a user having a postpaid account is received from the network component by the real time event driven rating system.

A process block 608 is executed after the process block 606. In the process block 608 the received CDR is forwarded to the batch processing system by the real time event driven rating system.

A process block 610 is executed after the process block 608. The forwarded CDR is received by the batch processing system.

A process block 611 is executed after the process block 610. In the process block 611 the batch processing system stores the CDR received from the real time even driven rating system in the database 509.

The following process blocks 612-614 and 618 are executed at an end of a billing cycle of the postpaid account.

The process block 612 is executed after the process block 611. In the process block 613 a query of the database for retrieval of CDRs received during the billing cycle is performed. The billing cycle can be a billing cycle of one or more postpaid accounts.

The process block 618 is executed after the process block 612, then aggregation/modification of at least some of the retrieved CDRs is performed as described above and the aggregate/modified CDRs are sent to the real time event driven real time system instead the original ones in the subsequent process block 613.

The process block 613 is executed either after the process block 618. In the process block 613 an event record comprising the retrieved CDRs is generated.

The process block 614 is executed after the process block 613. In the process block 614 the event record is sent to the real time event driven rating system.

Process blocks 619, 616, and 616 are executed by the real time event driven rating system. The process block 616 is executed after the process block 614. In the process block the event record is received by the real time even driven rating system form the batch processing system.

The process block 617 is executed after the process block 616. In the process block 617 the CDRs comprised in the received event record are inputted into the rating component for determining a charge amount for CDRs comprised in the event record.

The process block 619 is executed after the process block 617. In the process block 619 a billing message comprising a charge amount for CDRs comprised in the event record is sent from the real time event driven rating system to the batch processing system. Afterwards the batch processing system can generate a bill for a user having postpaid account according to which the services were used and the CDRs of the event record were generated.

Processing of the event record results in a workload for the real time event driven rating system. In the process block 614 the event record can be sent to the real time event driven rating system by the batch processing when its workload low. The monitoring of the workload by the batch processing system is described above.

Flow chart 615 illustrates processing by the real time event driven rating system CDR related to a usage of a service by a user having a prepaid account. In a process block 600 the CDR related to the usage of the service by the user having the prepaid account is received by the real time event driven rating system from the network component. A process block 601 is executed after the process block 600. In the process block 601 the received CDR is inputted into the rating component for determining a charge amount for the received CDR. A process block 602 is executed after the process block 601. In the process block 602 the prepaid account is charged by the charge amount. A process block 603 is executed after the process block 602 if the remaining credit of the account balance of the prepaid account is below a threshold (e.g. zero). In the process block 603 an interruption message for interruption of the telecommunication service is generated. The interruption message can indicate that providing of the telecommunication service has to be stopped (e.g. telephone connection has to be terminated). A process block 605 is executed after the process block 603 if the process block 603 is executed. In the process block 605 the interruption message is sent to the network component. A process block 700 is executed after one of the process blocks 601-603 or 605. In the process block 700 the charge amount is added to the received CDR. A process block 701 is executed after the process block 700. In the process block 701 the received CDR is forwarded to the batch processing system.

A process block 710 is executed after the process block 701. In the process block 710 the forwarded CDR is received by the batch processing system. A process block 711 is executed after the process block 710. In the process block 711 the received CDR is stored in the database. A process block 705 is executed after the process block 711. In the process block 705 a rating/rerating request to rate/rerate the prepaid account is received. The time interval for rating/rerating the prepaid account can be specified in the request. A process block 706 is executed after the process block 705. In the process block 706 the querying of the database for the CDRs related to the prepaid account is executed. The CDRs to be queried are generated in the time interval specified in the request. A process block 712 is executed after the process block 706. In the process block 712 a preliminary overall charge amount is calculated. The preliminary charge amount can be a sum of all charge amounts of the retrieved CDRs. A process block 707 is executed after the process block 712. In the process block 707 the retrieved CDRs are modified according to the rating rules related to the prepaid account. Various ways of modification are described above. A process block 708 is executed after the process block 707. In the process block 708 an event record comprising the modified CDRs and the preliminary charge amount is generated. A process block 709 is executed after the process block 708. In the process block 709 the event record is sent to the real time vent driven rating system.

A process block 702 is executed after the process block 709. In the process block 702 the modified CDRs of the event record are inputted into the rating component of the real time event driven rating system and the final overall charge amount is determined by the rating component. A process block 703 is executed after the process block 702. In the process block 703 the remaining credit of the account balance of the prepaid account is updated according to a difference between the preliminary overall charge amount and the final overall charge amount. For instance if the final charge amount is 60 Euros and the preliminary charge amount is 70 Euros, then 10 Euros are added to the remaining credit of the account balance. A process block 704 is executed after the process block 703. In the process block 704 a billing message comprising the final charge amount is sent to the batch processing system. Afterwards the batch processing system can generate a bill for the user of the prepaid account using the final charge amount.

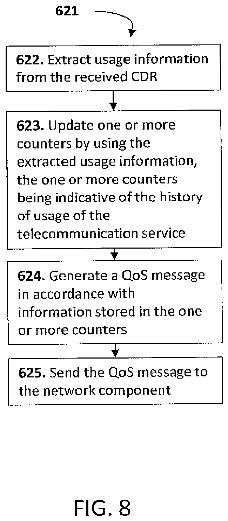

Fig. 8 illustrates a flow chart 621 of another method, when a QoS of the provided telecommunication resource depends on a prehistory of usage of this resource. For instance when a data volume downloaded by the user using an internet connection exceeds a limit, then connection speed of the internet connection has to be lowered.

In a process block 622 a usage information is extracted from the received CDR. For instance it can be data volume downloaded by the user.

A process block 623 is executed after the process block 622. In the process block 623 one or more counters are updated by using the extracted usage information. The one or more counters are indicative of the history of usage of the telecommunication service. For instance, the data volume downloaded by the user is added to a data volume counter where data volumes previously downloaded by the user a summed.

A process block 624 is executed after the process block 623. In the process block 624 a QoS message is generated in accordance with information stored in the one or more counters. For instance, if a value of the data volume counter is below the limit, then the QoS message indicates that the user can download data at the same speed as before. On the other hand, if a value of the data volume counter is above the limit, then the QoS message indicates that connection speed of the internet connection used by the user has to be lowered.

A process block 625 is executed after the process block 624. In the process block 625 the QoS message is sent to the network component. For instance it can be the network component providing the internet connection used by the user.

If one or more counters are used for registering of the usage of the resources used by a user having a postpaid account, then at least some of them are ought to be reset at an end of a billing cycle of the postpaid account. This can be done is various ways. For instance, the batch processing system can generate a reset message and send it to the real time event driven processing system at the end of the billing cycle of the postpaid account or in response to receiving a request to rate/rerate the prepaid account. In response to receiving the reset message, the real time event driven rating system resets one more counters specified in the reset message.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A mobile digital cellular telecommunication system (514) comprising a network component (505, 506, 507, 508) configured to generate call detail records (CDRs), a real time event driven rating system (501, 502) and a batch processing system (512), the real time event driven rating system comprising a rating component (501a, 502a) having an interface for inputting the CDRs and being configured for rating an inputted CDR, the real time event driven rating system being configured to perform the following steps in response to receiving of a CDR (606) from the network component for a telecommunication service provided to a user (510, 511):
• forwarding the received CDR to the batch processing system (608) if the received CDR is related to a postpaid account of the user (606); and
• performing the following steps if the received CDR is related to a prepaid account of the user (600):
∘ inputting the received CDR into the rating component for determining a charge amount for the received CDR (601),
∘ adding to the received CDR the determined charge amount (700),
∘ after the adding to the received CDR the determined charge amount forwarding the received CDR to the batch processing system (701), and
∘ charging the prepaid account by the charge amount (602); and
the batch processing system being configured to perform the steps of:
• receiving the forwarded CDR (710), and
• storing the received CDR (711) in a database (509);
in response to receiving a rating request to rate the prepaid account in the time interval specified in the rating request (705) the batch processing system being further configured to perform the following steps:
• querying the database for retrieval of CDRs related to the prepaid account and their respective charge amounts which were received in said time interval (706),
• calculate a preliminary overall charge amount of the retrieved CDRs related to the prepaid account (712),
• modify the retrieved CDRs related to the prepaid account according to rating rules related to the prepaid account (707),
• generating an event record related to the prepaid account, the event record related to the prepaid account comprising the modified CDRs related to the prepaid account and the preliminary overall charge amount (708), and
• sending the event record related to the prepaid account to the real time event driven rating system (709);
the real time event driven rating system being further configured to perform the following steps in response to receiving the event record related to the prepaid account from the batch processing system:
• inputting the modified CDRs comprised in the received event record related to the prepaid account into the rating component for determining a final overall charge amount for the modified CDRs comprised in the event record related to the prepaid account (702),
• updating a remaining credit of an account balance of the prepaid account according to a difference between the preliminary and the final overall charge amount (703), and
• sending a billing message related to the prepaid account to the batch processing system comprising the final overall charge amount (704).

2. The mobile digital cellular telecommunication system of claim 1, wherein the batch processing system being further configured to perform the following steps at an end of a billing cycle of the postpaid account:
• querying the database for retrieval of CDRs related to the postpaid account received during the billing cycle (612),
• modifying the retrieved CDRs related to the postpaid account according to rating rules related to the postpaid account (618),
• generating an event record related to the postpaid, the event record comprising the modified CDRs related to the postpaid account(613), and
• sending the event record related to the postpaid account to the real time event driven rating system (614);
the real time event driven rating system being further configured to perform the following steps in response to receiving the event record related to the postpaid account from the batch processing system (616):
• inputting the modified CDRs comprised in the received event record related to the postpaid account into the rating component for determining an overall charge amount for CDRs comprised in the event record (617), and
• sending a billing message related to the prepaid account to the batch processing system comprising the overall charge amount (619).

3. The mobile digital cellular telecommunication system of any one of the preceding claims, wherein the real time event driven rating system is further being configured to perform the following steps in response to the receiving of the CDR (606) from the network component for the telecommunication service provided to the user (510, 511) if the received CDR is related to the prepaid account of the user and the remaining credit of the account balance of the prepaid account is below a first threshold:
∘ generating an interruption message for interruption of the telecommunication service (603), and
∘ sending the interruption message to the network component (605).

4. The mobile digital cellular telecommunication system of claim 2, wherein the real time event driven rating system is further being configured to perform the following steps in response to the receiving of the CDR from the network component for the telecommunication service provided to the user if a quality of service (QoS) of the telecommunication service depends on a history of usage of the telecommunication service by the user:
• extracting usage information from the received CDR (622),
• updating one or more counters by using the extracted usage information, the one or more counters being indicative of the history of usage of the telecommunication service (623),
• generating a QoS message in accordance with information stored in the one or more counters (624), and
• sending the QoS message to the network component (625);
wherein the batch processing system is being further configured to perform the following step at the end of the billing cycle of the postpaid account or in response to the receiving the rating request to rate the prepaid account:
• sending a reset counter message to the real time event driven rating system;
wherein the real time event driven rating system is further being configured to perform the following steps:
• receiving the reset counter message;
• in response to the receiving of the reset counter message resetting the one or more counters.

5. The mobile digital cellular telecommunication system of claim 2 or claim 4, wherein the batch processing system is further configured to perform the step of:
• monitoring a volume of data transmitted per time unit from the real time event driven rating system to the batch processing system, wherein the data comprises the forwarded CDRs, wherein the sending of the event record related to the postpaid account to the real time event driven rating system is performed when the volume of the data transmitted per time unit is below a second threshold value, wherein the sending of the event record related to the prepaid account to the real time event driven rating system is performed when the volume of the data transmitted per time unit is below a third threshold value.

6. The mobile digital cellular telecommunication system of any one of the preceding claims, wherein the modifying of the retrieved CDRs related to the prepaid account according to the rating rules related to the prepaid account comprises the following steps:
∘ identifying CDRs the retrieved CDRs of the same type related to the prepaid account, and
∘ generating one aggregate CDR for all of the identified CDRs related to the prepaid account according to a least one of the rating rules related to the prepaid account, wherein the aggregate CDR is one of the modified CDRs related to the prepaid account.

7. The mobile digital cellular telecommunication system of any one of the preceding claims 2-6, wherein the modifying of the retrieved CDRs related to the postpaid account according to the rating rules related to the post account comprises the following steps:
∘ identifying CDRs the retrieved CDRs of the same type related to the postpaid account, and
∘ generating another one aggregate CDR for all of the identified CDRs related to the postpaid account according to a least one of the rating rules related to the postpaid account, wherein the another one aggregate CDR is one of the modified CDRs related to the postpaid account.

8. The mobile digital cellular telecommunication system of claim any one of the preceding claims, the mobile digital cellular telecommunication system further comprising a database server (503) for storing prepaid accounts and post-paid accounts, wherein each of some of the postpaid accounts comprises a respective services list of telecommunication services to be provided by one or more network components to a user having the each of some of the post-paid accounts, a respective rating information and rules for determining charge amounts for CDRs generated in relation to using the telecommunication services of the services list of the each of some of the postpaid accounts, a respective billing cycle information determining a schedule of the billing cycles of the each of some of the postpaid accounts, wherein each of some of the prepaid accounts comprises a respective services list of telecommunication services to be provided by one or more network components to a user having the each of some of the prepaid accounts and a respective rating information and rules for determining charge amounts for CDRs generated in relation to using the telecommunication services of the services list of the each of some of the postpaid accounts,
wherein the database server is configured to perform the steps of:
• sending the services list to the respective one or more network components,
• sending the rating information to the respective the real time event driven rating system,
• sending the billing cycle information and the rating rules to the batch processing system, and
• sending the rating request to rate the prepaid account;
wherein the network component is configured to perform the steps of:
• receiving the services list from the database server,
• storing the received services list, and
• providing the services of the received list to a user having either the postpaid or the prepaid account comprising the stored services list;
wherein the real time event driven rating system is further configured to perform the steps of:
• receiving the rating information from the database server,
• storing the received rating information, wherein the rating component is configured for rating the inputted CDR according to the stored rating information;
wherein the batch processing system is further configured to perform the steps of:
• receiving the billing cycle information and the rating rules from the database server,
• receiving rating request to rate the prepaid account, and
• storing the received billing cycle information and the received rating rules.

9. The mobile digital cellular telecommunication system of any of the preceding claims, the mobile digital cellular telecommunication system further comprising further real time event driven rating systems, wherein the network component is configured to send the CDRs to the real time event driven rating system, which data communicative coupling to the network component has the lowest data transfer latency in comparison with any other real time event driven rating system, wherein a data transfer latency of a data communicative coupling between the batch processing system and the real time event driven rating system, to which the network component is configured to send CDRs, is higher than the data transfer latency of the data communicative coupling used for the sending of the CDRs.

10. A computer-implemented method (620, 615) for processing of call detail records (CDRs) in a mobile digital cellular telecommunication system (514) comprising a network component (505, 506, 507, 508) configured to generate the CDRs, a real time event driven rating system (501, 502), and a batch processing system (512), the real time event driven rating system comprising a rating component having an interface for inputting the CDRs (501a, 502a) and being configured for rating an inputted CDR, the method comprising the following steps performed by the real time event driven rating system in response to receiving of a CDR from the network component for a telecommunication service provided to a user (511, 510):
• forwarding the received CDR to the batch processing system (608) if the received CDR is related to a postpaid account of the user (606); and
• performing the following steps if the received CDR is related to a prepaid account of the user (600):
∘ inputting the received CDR into the rating component for determining a charge amount for the received CDR (601),
∘ adding to the received CDR the determined charge amount (700),
∘ after the adding to the received CDR the determined charge amount forwarding the received CDR to the batch processing system (701), and
∘ charging the prepaid account by the charge amount (602); and
the method further comprising the following steps performed by the batch processing system:
• receiving the forwarded CDR (710), and
• storing the received CDR (711) in a database (509);
the method further comprising the following steps performed by the batch processing system in response to receiving a rating request (705) to rate the prepaid account in the time interval specified in the rating request:
• querying the database for retrieval of CDRs related to the prepaid account and their respective charge amounts which were received in said time interval (706),
• calculate a preliminary overall charge amount of the retrieved CDRs related to the prepaid account (712),
• modify the retrieved CDRs related to the prepaid account according to rating rules related to the prepaid account (707),
• generating an event record related to the prepaid account, the event record related to the prepaid account comprising the modified CDRs related to the prepaid account and the preliminary overall charge amount (708), and
• sending the event record related to the prepaid account to the real time event driven rating system (709);
the method further comprising the following steps performed by the real time event driven rating system in response to receiving the event record related to the prepaid account from the batch processing system:
• inputting the modified CDRs comprised in the received event record related to the prepaid account into the rating component for determining a final overall charge amount for the modified CDRs comprised in the event record related to the prepaid account (702),
• updating a remaining credit of an account balance of the prepaid account according to a difference between the preliminary and the final overall charge amount (703), and
• sending a billing message related to the prepaid account to the batch processing system comprising the final overall charge amount (704).

11. The computer-implemented method of claim 10, wherein the method further comprising the following steps performed by the batch processing system at an end of a billing cycle of the postpaid account:
• querying the database for retrieval of CDRs related to the postpaid account received during the billing cycle (612),
• modifying the retrieved CDRs related to the postpaid account according to rating rules related to the postpaid account (618),
• generating an event record related to the postpaid, the event record comprising the modified CDRs related to the postpaid account(613), and
• sending the event record related to the postpaid account to the real time event driven rating system (614);
the method further comprising the following steps performed by the real time event driven rating system in response to receiving the event record related to the postpaid account from the batch processing system (616):
• inputting the modified CDRs comprised in the received event record related to the postpaid account into the rating component for determining an overall charge amount for CDRs comprised in the event record (617), and
• sending a billing message related to the prepaid account to the batch processing system comprising the overall charge amount (619).

12. The computer-implemented method of one of the claims 10 or 11, the method further comprising the following steps performed by the real time event driven rating system in response to the receiving of the CDR (606) from the network component for the telecommunication service provided to the user (510, 511) if the received CDR is related to the prepaid account of the user and the remaining credit of the account balance of the prepaid account is below a first threshold:
∘ generating an interruption message for interruption of the telecommunication service (603), and
∘ sending the interruption message to the network component (605).

13. The computer-implemented method of claim 11,the method further comprising the following steps performed by the real time event driven rating system in response to the receiving of the CDR from the network component for the telecommunication service provided to the user if a quality of service (QoS) of the telecommunication service depends on a history of usage of the telecommunication service by the user:
• extracting usage information from the received CDR (622),
• updating one or more counters by using the extracted usage information, the one or more counters being indicative of the history of usage of the telecommunication service (623),
• generating a QoS message in accordance with information stored in the one or more counters (624), and
• sending the QoS message to the network component (625);
the method further comprising the following steps performed by the batch processing system at the end of the billing cycle of the postpaid account or in response to the receiving the rating request to rate the prepaid account:
• sending a reset counter message to the real time event driven rating system;
the method further comprising the following steps performed by the real time event driven rating system:
• receiving the reset counter message;
• in response to the receiving of the reset counter message resetting the one or more counters.

14. The computer-implemented method of any of the claims 11 or 13, the method further comprising the following step performed by the batch processing system:
• monitoring a volume of data transmitted per time unit from the real time event driven rating system to the batch processing system, wherein the data comprises the forwarded CDRs, wherein the sending of the event record related to the postpaid account to the real time event driven rating system is performed when the volume of the data transmitted per time unit is below a second threshold value, wherein the sending of the event record related to the prepaid account to the real time event driven rating system is performed when the volume of the data transmitted per time unit is below a third threshold value.

15. A computer readable medium having stored thereon a computer executable code for execution by computer processors controlling a mobile digital cellular telecommunication system, wherein execution of the instructions of the executable code causes the computer processors to execute the computer-implemented method of claims 10-14 on the mobile digital cellular telecommunication system.

## Patentansprüche

1. Mobiles digitales zellulares Telekommunikationssystem (514), umfassend eine Netzwerkkomponente (505, 506, 507, 508), dazu konfiguriert, Kommunikationsdatensätze (call detail records - CDRs) zu generieren, ein Echtzeit-ereignisgesteuertes Bewertungssystem (501, 502) und ein Batchverarbeitungssystem (512), wobei das Echtzeit-ereignisgesteuerte Bewertungssystem eine Bewertungskomponente (501a, 502a) umfasst, die eine Schnittstelle zum Eingeben der CDRs aufweist und zum Bewerten eines eingegebenen CDR konfiguriert ist, wobei das Echtzeit-ereignisgesteuerte Bewertungssystem zum Durchführen der folgenden Schritte in Reaktion auf das Empfangen eines CDR (606) von der Netzwerkkomponente für einen einem Benutzer (510, 511) bereitgestellten Telekommunikationsdienst konfiguriert ist:
• Weiterleiten des empfangenen CDR an das Batchverarbeitungssystem (608), wenn der empfangene CDR mit einem Postpaid-Konto des Benutzers in Bezug steht (606);
und
• Durchführen der folgenden Schritte, wenn der empfangene CDR mit einem Prepaid-Konto des Benutzers in Bezug steht (600):
∘ Eingeben des empfangenen CDR in die Bewertungskomponente zum Bestimmen eines Belastungsbetrags für den empfangenen CDR (601),
∘ Addieren des bestimmten Belastungsbetrags zu dem empfangenen CDR (700),
∘ nach dem Addieren des bestimmten Belastungsbetrags zu dem empfangenen CDR Weiterleiten des empfangenen CDR an das Batchverarbeitungssystem (701), und
∘ Belasten des Prepaid-Kontos mit dem Belastungsbetrag (602); und
wobei das Batchverarbeitungssystem zum Durchführen der folgenden Schritte konfiguriert ist:
• Empfangen des weitergeleiteten CDR (710), und
• Speichern des empfangenen CDR (711) in einer Datenbank (509);
in Reaktion auf Empfangen einer Bewertungsanfrage zum Bewerten des Prepaid-Kontos in dem in der Bewertungsanfrage (705) spezifizierten Zeitraum, wobei das Batchverarbeitungssystem ferner zum Durchführen der folgenden Schritte konfiguriert ist:
• Abfragen der Datenbank zum Abrufen von mit dem Prepaid-Konto in Bezug stehenden CDRs und deren jeweilige Belastungsbeträge, die in dem Zeitraum empfangen wurden (706),
• Berechnen eines vorläufigen gesamten Belastungsbetrags der abgerufenen mit dem Prepaid-Konto in Bezug stehenden CDRs (712),
• Modifizieren der abgerufenen mit dem Prepaid-Konto in Bezug stehenden CDRs gemäß den mit dem Prepaid-Konto in Bezug stehenden Bewertungsregeln (707),
• Generieren eines mit dem Prepaid-Konto in Bezug stehenden Ereignisdatensatzes, wobei der mit dem Prepaid-Konto in Bezug stehende Ereignisdatensatz die modifizierten mit dem Prepaid-Konto in Bezug stehenden CDRs und den vorläufigen Gesamtbelastungsbetrag umfassen (708), und
• Senden des mit dem Prepaid-Konto in Bezug stehenden Ereignisdatensatzes an das Echtzeit-ereignisgesteuerte Bewertungssystem (709);
wobei das Echtzeit-ereignisgesteuerte Bewertungssystem ferner zum Durchführen der folgenden Schritte in Reaktion auf Empfangen des mit dem Prepaid-Konto in Bezug stehenden Ereignisdatensatzes von dem Batchverarbeitungssystem konfiguriert ist:
• Eingeben der modifizierten CDRs, die in dem mit dem Prepaid-Konto in Bezug stehenden Ereignisdatensatz umfasst sind, in die Bewertungskomponente zum Bestimmen eines endgültigen gesamten Belastungsbetrags für die modifizierten CDRs, die in dem mit dem Prepaid-Konto in Bezug stehenden Ereignisdatensatz umfasst sind (702),
• Aktualisieren eines verbleibenden Guthabens eines Kontostands des Prepaid-Kontos gemäß eines Unterschieds zwischen dem vorläufigen und dem endgültigen gesamten Belastungsbetrag (703), und
• Senden einer mit dem Prepaid-Konto in Bezug stehenden Abrechnungsnachricht an das Batchverarbeitungssystem, die den endgültigen gesamten Belastungsbetrag umfasst (704).

2. Mobiles digitales zellulares Telekommunikationssystem nach Anspruch 1, wobei das Batchverarbeitungssystem ferner zum Durchführen der folgenden Schritte an einem Ende eines Abrechnungszeitraums des Postpaid-Kontos konfiguriert ist;
• Abfragen der Datenbank zum Abrufen von mit dem Postpaid-Konto in Bezug stehenden CDRs, die während des Abrechnungszeitraums empfangen wurden (612),
• Modifizieren der abgerufenen mit dem Postpaid-Konto in Bezug stehenden CDRs gemäß der mit dem Postpaid-Konto in Bezug stehenden Bewertungsregeln (618),
• Generieren eines mit dem Postpaid-Konto in Bezug stehenden Ereignisdatensatzes, wobei der Ereignisdatensatz die modifizierten mit dem Postpaid-Konto in Bezug stehenden CDRs umfasst (613), und
• Senden des mit dem Postpaid-Konto in Bezug stehenden Ereignisdatensatzes an das Echtzeit-ereignisgesteuerte Bewertungssystem (614);
wobei das Echtzeit-ereignisgesteuerte Bewertungssystem ferner zum Durchführen der folgenden Schritte in Reaktion auf Empfangen des mit dem Postpaid-Konto in Bezug stehenden Ereignisdatensatzes von dem Batchverarbeitungssystem konfiguriert ist (616):
• Eingeben der modifizierten CDRs, die in dem erhaltenen mit dem Postpaid-Konto in Bezug stehenden Ereignisdatensatz umfasst sind, in die Bewertungskomponente zum Bestimmen eines gesamten Belastungsbetrags für in dem Ereignisdatensatz umfasste CDRs (617), und
• Senden einer mit dem Prepaid-Konto in Bezug stehenden Abrechnungsnachricht an das Batchverarbeitungssystem, umfassend den gesamten Belastungsbetrag (619).

3. Mobiles digitales zellulares Telekommunikationssystem nach einem der vorhergehenden Ansprüche, wobei das Echtzeit-ereignisgesteuerte Bewertungssystem ferner zum Durchführen der folgenden Schritte in Reaktion auf das Empfangen des CDR (606) von der Netzwerkkomponente für den dem Benutzer bereitgestellten Telekommunikationsdienst (510, 511) konfiguriert ist, wenn der empfangene CDR mit dem Prepaid-Konto des Benutzers in Bezug steht und das verbleibende Guthaben des Kontostands des Prepaid-Kontos unter einer ersten Schwelle liegt:
∘ Generieren einer Unterbrechungsnachricht zur Unterbrechung des Telekommunikationsdienstes (603), und
∘ Senden der Unterbrechungsnachricht an die Netzwerkkomponente (605).

4. Mobiles digitales zellulares Telekommunikationssystem nach Anspruch 2, wobei das Echtzeit-ereignisgesteuerte Bewertungssystem ferner zum Durchführen der folgenden Schritte in Reaktion auf das Empfangen des CDR von der Netzwerkkomponente für den dem Benutzer bereitgestellten Telekommunikationsdienst konfiguriert ist, wenn eine Dienstgüte (quality of service - QoS) des Telekommunikationsdienstes von einer Historie der Nutzung des Telekommunikationsdienstes durch den Benutzer abhängt:
• Entnehmen von Nutzungsinformationen aus dem empfangenen CDR (622),
• Aktualisieren von einem oder mehreren Zählern durch Verwenden der entnommenen Nutzungsinformationen, wobei der eine oder die mehreren Zähler eine Nutzungshistorie des Telekommunikationsdienstes erkennen lassen (623),
• Generieren einer QoS-Nachricht gemäß der in dem einen oder den mehreren Zählern gespeicherten Informationen (624), und
• Senden der QoS-Nachricht an die Netzwerkkomponente (625);
wobei das Batchverarbeitungssystem ferner dazu konfiguriert ist, den folgenden Schritt am Ende des Abrechnungszeitraums des Postpaid-Kontos oder in Reaktion auf das Empfangen der Bewertungsanfrage zum Bewerten des Prepaid-Kontos durchzuführen:
• Senden einer Zähler-Reset-Nachricht an das Echtzeit-ereignisgesteuerte Bewertungssystem;
wobei das Echtzeit-ereignisgesteuerte Bewertungssystem ferner zum Durchführen der folgenden Schritte konfiguriert ist:
• Empfangen der Zähler-Reset-Nachricht;
• in Reaktion auf das Empfangen der Zähler-Reset-Nachricht Rücksetzen des einen oder der mehreren Zähler.

5. Mobiles digitales zellulares Telekommunikationssystem nach Anspruch 2 oder Anspruch 4, wobei das Batchverarbeitungssystem ferner zum Durchführen des folgenden Schritts konfiguriert ist:
• Überwachen einer pro Zeiteinheit von dem Echtzeit-ereignisgesteuerten Bewertungssystem an das Batchverarbeitungssystem übertragenen Datenmenge, wobei die Daten die weitergeleiteten CDRs umfassen, wobei das Senden des mit dem Postpaid-Konto in Bezug stehenden Ereignisdatensatzes an das Echtzeit-ereignisgesteuerte Bewertungssystem durchgeführt wird, wenn die pro Zeiteinheit übertragene Datenmenge unter einem zweiten Schwellenwert liegt, wobei das Senden des mit dem Prepaid-Konto in Bezug stehenden Ereignisdatensatzes an das Echtzeit-ereignisgesteuerte Bewertungssystem durchgeführt wird, wenn die pro Zeiteinheit übertragene Datenmenge unter einem dritten Schwellenwert liegt.

6. Mobiles digitales zellulares Telekommunikationssystem nach einem der vorhergehenden Ansprüche, wobei das Modifizieren der abgerufenen mit dem Prepaid-Konto in Bezug stehenden CDRs gemäß den mit dem Prepaid-Konto in Bezug stehenden Bewertungsregeln die folgenden Schritte umfasst:
∘ Identifizieren von CDRs der abgerufenen mit dem Prepaid-Konto in Bezug stehenden CDRs desselben Typs, und
∘ Generieren eines Gesamt-CDR für alle identifizierten mit dem Prepaid-Konto in Bezug stehenden CDRs gemäß mindestens einer der mit dem Prepaid-Konto in Bezug stehenden Bewertungsregeln, wobei der Gesamt-CDR einer der mit dem Prepaid-Konto in Bezug stehenden modifizierten CDRs ist.

7. Mobiles digitales zellulares Telekommunikationssystem nach einem der vorhergehenden Ansprüche 2-6, wobei das Modifizieren der abgerufenen mit dem Postpaid-Konto in Bezug stehenden CDRs gemäß der mit dem Postpaid-Konto in Bezug stehenden Bewertungsregeln die folgenden Schritte umfasst:
∘ Identifizieren von CDRs der abgerufenen mit dem Postpaid-Konto in Bezug stehenden CDRs desselben Typs, und
∘ Generieren eines weiteren Gesamt-CDR für alle identifizierten mit dem Postpaid-Konto in Bezug stehenden CDRs gemäß mindestens einer der mit dem Postpaid-Konto in Bezug stehenden Bewertungsregeln, wobei der andere Gesamt-CDR einer der mit dem Postpaid-Konto in Bezug stehenden modifizierten CDRs ist.

8. Mobiles digitales zellulares Telekommunikationssystem nach einem der vorhergehenden Ansprüche, wobei das mobile digitale zellulare Telekommunikationssystem ferner einen Datenbankserver (503) zum Speichern von Prepaid-Konten und Postpaid-Konten umfasst, wobei jedes von einigen der Postpaid-Konten eine jeweilige Dienstliste von Telekommunikationsdiensten, die von einer oder mehreren Netzwerkkomponenten an einen Benutzer bereitzustellen sind, der das jede von einigen der Postpaid-Konten hat, eine jeweilige Bewertungsinformation und Regeln zum Bestimmen von Belastungsbeträgen für CDRs, die in Bezug auf das Benutzen der Telekommunikationsdienste der Dienstliste des jeden von einigen der Postpaid-Konten erzeugt wurden, eine jeweilige Abrechnungszeitrauminformation, die einen Zeitplan der Abrechnungszeiträume des jeden von einigen der Postpaid-Konten bestimmt, umfasst, wobei jedes von einigen der Prepaid-Konten eine jeweilige Dienstliste von Telekommunikationsdiensten umfasst, die einem Benutzer durch eine oder mehrere Netzwerkkomponenten bereitzustellen sind, aufweisend das jede von einigen der Prepaid-Konten und eine jeweilige Bewertungsinformation und Regeln zum Bestimmen der Belastungsbeträge für CDRs, die in Bezug auf das Benutzen der Telekommunikationsdienste der Dienstliste des jeden von einigen der Postpaid-Konten erzeugt wurden, wobei der Datenbankserver zum Durchführen der folgenden Schritte konfiguriert ist:
• Senden der Dienstliste an die jeweilige eine oder mehreren Netzwerkkomponenten,
• Senden der Bewertungsinformation an das jeweilige Echtzeit-ereignisgesteuerte Bewertungssystem,
• Senden der Abrechnungszeitrauminformation und der Bewertungsregeln an das Batchverarbeitungssystem, und
• Senden der Bewertungsanfrage zum Bewerten des Prepaid-Kontos;
wobei die Netzwerkkomponente zum Durchführen der folgenden Schritte konfiguriert ist:
• Empfangen der Dienstliste von dem Datenbankserver,
• Speichern der empfangenen Dienstliste, und
• Bereitstellen der Dienste der empfangenen Liste an einen Benutzer, der entweder das Postpaid- oder das Prepaid-Konto hat, das die gespeicherte Dienstliste umfasst;
wobei das Echtzeit-ereignisgesteuerte Bewertungssystem ferner zum Durchführen der folgenden Schritte konfiguriert ist:
• Empfangen der Bewertungsinformation von dem Datenbankserver,
• Speichern der empfangenen Bewertungsinformation, wobei die Bewertungskomponente dazu konfiguriert ist, den eingegebenen CDR gemäß der gespeicherten Bewertungsinformation zu bewerten;
wobei das Batchverarbeitungssystem zum Durchführen der folgenden Schritte konfiguriert ist:
• Empfangen der Abrechnungszeitrauminformation und der Bewertungsregeln von dem Datenbankserver,
• Empfangen der Bewertungsanfrage zum Bewerten des Prepaid-Kontos, und
• Speichern der empfangenen Abrechnungszeitrauminformation und der empfangenen Bewertungsregeln.

9. Mobiles digitales zellulares Telekommunikationssystem nach einem der vorhergehenden Ansprüche, wobei das mobile digitale zellulare Telekommunikationssystem ferner weitere Echtzeit-ereignisgesteuerte Bewertungssysteme umfasst, wobei die Netzwerkkomponente konfiguriert ist, die CDRs an das Echtzeit-ereignisgesteuerte Bewertungssystem zu senden, dessen datenübertragungsfähige Kopplung an die Netzwerkkomponente die im Vergleich mit jedem anderen Echtzeit-ereignisgesteuerten Bewertungssystem niedrigste Datentransferlatenzzeit aufweist, wobei eine Datentransferlatenzzeit einer datenübertragungsfähigen Kopplung zwischen dem Batchverarbeitungssystem und dem Echtzeit-ereignisgesteuerten Bewertungssystem, an das die Netzwerkkomponente konfigurationsgemäß CDRs sendet, größer ist als die Datentransferlatenzzeit der datenübertragungsfähigen Kopplung, die zum Senden der CDRs verwendet wird.

10. Computerimplementiertes Verfahren (620, 615) zum Verarbeiten von Kommunikationsdatensätzen (CDRs) in einem mobilen digitalen zellularen Telekommunikationssystem (514), das eine Netzwerkkomponente (505, 506, 507, 508), dazu konfiguriert, CDRs zu generieren, ein Echtzeit-ereignisgesteuertes Bewertungssystem (501, 502) und ein Batchverarbeitungssystem (512) umfasst, wobei das Echtzeit-ereignisgesteuerte Bewertungssystem eine Bewertungskomponente umfasst, die eine Schnittstelle zum Eingeben der CDRs (501a, 502a) aufweist und dazu konfiguriert ist, einen eingegebenen CDR zu bewerten, wobei das Verfahren die folgenden Schritte umfasst, die von dem Echtzeit-ereignisgesteuerten Bewertungssystem in Reaktion auf Empfangen eines CDR von der Netzwerkkomponente für einen einem Benutzer bereitgestellten Telekommunikationsdienst durchgeführt werden (511, 510):
• Weiterleiten des empfangenen CDR an das Batchverarbeitungssystem (608), wenn der empfangene CDR mit einem Postpaid-Konto des Benutzers in Bezug steht (606); und
• Durchführen der folgenden Schritte, wenn der empfangene CDR mit einem Prepaid-Konto des Benutzers in Bezug steht (600):
∘ Eingeben des empfangenen CDR in die Bewertungskomponente zum Bestimmen eines Belastungsbetrags für den empfangenen CDR (601),
∘ Hinzufügen des bestimmten Belastungsbetrags zu dem empfangenen CDR (700),
∘ nach dem Hinzufügen des bestimmten Belastungsbetrags zu dem empfangenen CDR Weiterleiten des empfangenen CDR an das Batchverarbeitungssystem (701), und
∘ Belasten des Prepaid-Kontos mit dem Belastungsbetrag (602); und
wobei das Verfahren ferner die von dem Batchverarbeitungssystem durchgeführten folgenden Schritte umfasst:
• Empfangen des weitergeleiteten CDR (710), und
• Speichern des empfangenen CDR (711) in einer Datenbank (509);
wobei das Verfahren ferner die folgenden von dem Batchverarbeitungssystem durchgeführten Schritte umfasst in Reaktion auf Empfangen einer Bewertungsanfrage (705), um das Prepaid-Konto in dem in der Bewertungsanfrage spezifizierten Zeitraum zu bewerten;
• Abfragen der Datenbank zum Abrufen von mit dem Prepaid-Konto in Bezug stehenden CDRs und deren jeweilige Belastungsbeträge, die in dem Zeitraum empfangen wurden (706),
• Berechnen eines vorläufigen gesamten Belastungsbetrags der abgerufenen mit dem Prepaid-Konto in Bezug stehenden CDRs (712),
• Modifizieren der abgerufenen mit dem Prepaid-Konto in Bezug stehenden CDRs gemäß den mit dem Prepaid-Konto in Bezug stehenden Bewertungsregeln (707),
• Generieren eines mit dem Prepaid-Konto in Bezug stehenden Ereignisdatensatzes, wobei der mit dem Prepaid-Konto in Bezug stehende Ereignisdatensatz die modifizierten mit dem Prepaid-Konto in Bezug stehenden CDRs und den vorläufigen gesamten Belastungsbetrag (708) umfasst, und
• Senden des mit dem Prepaid-Konto in Bezug stehenden Ereignisdatensatzes an das Echtzeit-ereignisgesteuerte Bewertungssystem (709);
wobei das Verfahren ferner die von dem Echtzeit-ereignisgesteuerten Bewertungssystem in Reaktion auf das Empfangen des mit dem Prepaid-Konto in Bezug stehenden Ereignisdatensatzes von dem Batchverarbeitungssystem durchgeführten folgenden Schritte umfasst:
• Eingeben der modifizierten mit dem Prepaid-Konto in Bezug stehenden CDRs, die in dem empfangenen Ereignisdatensatz umfasst sind, in die Bewertungskomponente zum Bestimmen eines endgültigen gesamten Belastungsbetrags für die modifizierten mit dem Prepaid-Konto in Bezug stehenden CDRs, die in dem Ereignisdatensatz umfasst sind (702),
• Aktualisieren eines verbleibenden Guthabens eines Kontostands des Prepaid-Kontos gemäß eines Unterschieds zwischen dem vorläufigen und dem endgültigen gesamten Belastungsbetrag (703), und
• Senden einer mit dem Prepaid-Konto in Bezug stehenden Abrechnungsnachricht an das Batchverarbeitungssystem, die den endgültigen gesamten Belastungsbetrag umfasst (704).

11. Computerimplementiertes Verfahren nach Anspruch 10, wobei das Verfahren ferner die folgenden Schritte umfasst, die von dem Batchverarbeitungssystem an einem Ende eines Abrechnungszeitraums des Postpaid-Kontos durchgeführt werden:
• Abfragen der Datenbank zum Abrufen von mit dem Postpaid-Konto in Bezug stehenden CDRs, die während des Abrechnungszeitraums empfangen wurden (612),
• Modifizieren der abgerufenen mit dem Postpaid-Konto in Bezug stehenden CDRs gemäß mit dem Postpaid-Konto in Bezug stehenden Bewertungsregeln (618),
• Generieren eines mit dem Postpaid-Konto in Bezug stehenden Ereignisdatensatzes, wobei der Ereignisdatensatz die modifizierten mit dem Postpaid-Konto in Bezug stehenden CDRs umfasst (613),
und
• Senden des mit dem Postpaid-Konto in Bezug stehenden Ereignisdatensatzes an das Echtzeit-ereignisgesteuerte Bewertungssystem (614);
wobei das Verfahren ferner die folgenden Schritte umfasst, die von dem Echtzeit-ereignisgesteuerten Bewertungssystem in Reaktion auf Empfangen des mit dem Postpaid-Konto in Bezug stehenden Ereignisdatensatzes von dem Batchverarbeitungssystem durchgeführt werden (616):
• Eingeben der modifizierten CDRs, die in dem empfangenen mit dem Postpaid-Konto in Bezug stehenden Ereignisdatensatz umfasst sind, in die Bewertungskomponente zum Bestimmen eines gesamten Belastungsbetrags für CDRs, die in dem Ereignisdatensatz (617) umfasst sind, und
• Senden einer mit dem Prepaid-Konto in Bezug stehenden Abrechnungsnachricht an das Batchverarbeitungssystem, die den gesamten Belastungsbetrag umfasst (619).

12. Computerimplementiertes Verfahren nach einem der Ansprüche 10 oder 11, wobei das Verfahren ferner die folgenden Schritte aufweist, die von dem Echtzeit-ereignisgesteuerten Bewertungssystem in Reaktion auf das Empfangen des CDR (606) von der Netzwerkkomponente für den dem Benutzer bereitgestellten Telekommunikationsdienst durchgeführt werden (510, 511), wenn der empfangene CDR mit dem Prepaid-Konto des Benutzers in Bezug steht und das verbleibende Guthaben des Kontostandes des Prepaid-Kontos unter einer ersten Schwelle liegt:
∘ Erzeugen einer Unterbrechungsnachricht zur Unterbrechung des Telekommunikationsdienstes (603), und
∘ Senden der Unterbrechungsnachricht an die Netzwerkkomponente (605).

13. Computerimplementiertes Verfahren nach Anspruch 11, wobei das Verfahren ferner die folgenden Schritte umfasst, die von dem Echtzeit-ereignisgesteuerten Bewertungssystem in Reaktion auf das Empfangen des CDR von der Netzwerkkomponente für den dem Benutzer bereitgestellten Telekommunikationsdienst durchgeführt werden, wenn eine Dienstgüte (QoS) des Telekommunikationsdiensts von einer Historie der Nutzung des Telekommunikationsdiensts durch den Benutzer abhängt;
• Entnehmen von Nutzungsinformationen aus dem empfangenen CDR (622),
• Aktualisieren von einem oder mehreren Zählern unter Verwendung der entnommenen Nutzungsinformationen, wobei der eine oder die mehreren Zähler die Nutzungshistorie des Telekommunikationsdienstes erkennen lassen (623),
• Generieren einer QoS-Nachricht gemäß von in dem einen oder mehreren Zählern gespeicherten Informationen (624), und
• Senden der QoS-Nachricht an die Netzwerkkomponente (625);
wobei das Verfahren ferner die folgenden Schritte umfasst, die von dem Batchverarbeitungssystem an einem Ende des Abrechnungszeitraums des Postpaid-Kontos oder in Reaktion auf das Empfangen der Bewertungsanfrage zum Bewerten des Prepaid-Kontos durchgeführt werden:
• Senden einer Zähler-Reset-Nachricht an das Echtzeit-ereignisgesteuerte Bewertungssystem;
wobei das Verfahren ferner die folgenden von dem Echtzeit-ereignisgesteuerten Bewertungssystem durchgeführten Schritte umfasst:
• Empfangen der Zähler-Reset-Nachricht;
• in Reaktion auf das Empfangen der Zähler-Reset-Nachricht Rücksetzen des einen oder der mehreren Zähler.

14. Computerimplementiertes Verfahren nach einem der Ansprüche 11 oder 13, wobei das Verfahren ferner den folgenden von dem Batchverarbeitungssystem durchführten Schritt umfasst:
• Überwachen einer pro Zeiteinheit von dem Echtzeit-ereignisgesteuerten Bewertungssystem an das Batchverarbeitungssystem übertragenen Datenmenge, wobei die Daten die weitergeleiteten CDRs umfassen, wobei das Senden des mit dem Postpaid-Konto in Bezug stehenden Ereignisdatensatzes an das Echtzeit-ereignisgesteuerte Bewertungssystem durchgeführt wird, wenn die pro Zeiteinheit übertragene Datenmenge unter einem zweiten Schwellenwert liegt, wobei das Senden des mit dem Prepaid-Konto in Bezug stehenden Ereignisdatensatzes an das Echtzeit-ereignisgesteuerte Bewertungssystem durchgeführt wird, wenn die pro Zeiteinheit übertragene Datenmenge unter einem dritten Schwellenwert liegt.

15. Computerlesbarer Datenträger, auf dem ein computerausführbarer Code zur Ausführung durch Computerprozessoren, die ein mobiles digitales zellulares Telekommunikationssystem steuern, gespeichert sind, wobei die Ausführung der Anweisungen des ausführbaren Codes die Computerprozessoren zum Ausführen des computerimplementierten Verfahrens nach den Ansprüchen 10-14 an dem mobilen digitalen zellularen Telekommunikationssystem veranlasst.

## Revendications

1. Système de télécommunication cellulaire numérique mobile (514) comprenant un composant de réseau (505, 506, 507, 508) configuré pour générer des enregistrements de détail d'appels (CDR), un système de tarification en temps réel à commande événementielle (501, 502) et un système de traitement par lots (512), le système de tarification en temps réel à commande événementielle comprenant un composant de tarification (501a, 502a) ayant une interface pour l'introduction des CDR et étant configuré pour facturer un CDR introduit, le système de tarification en temps réel à commande événementielle étant configuré pour réaliser les étapes suivantes en réponse à la réception d'un CDR (606) en provenance du composant de réseau pour un service de télécommunication proposé à un utilisateur (510, 511) :
• le transfert du CDR reçu vers le système de traitement par lots (608) si le CDR reçu se rapporte à un compte post payé de l'utilisateur (606) ; et
• la réalisation des étapes suivantes si le CDR reçu se rapporte à un compte prépayé de l'utilisateur (600) :
∘ l'introduction du CDR reçu dans le composant de tarification pour déterminer un montant de frais pour le CDR reçu (601),
∘ l'ajout au CDR reçu du montant des frais retenu (700),
∘ après l'ajout au CDR reçu du montant des frais retenu, le transfert du CDR reçu vers le système de traitement par lots (701), et
∘ la facturation du montant des frais (602) sur le compte prépayé ; et
le système de traitement par lots étant configuré pour réaliser les étapes de :
• réception du CDR transféré (710), et de
• stockage du CDR reçu (711) dans une base de données (509) ;
en réponse à la réception d'une demande de tarification pour facturer le compte prépayé dans l'intervalle de temps indiqué dans la demande de tarification (705), le système de traitement par lots étant en outre configuré pour réaliser les étapes suivantes :
• l'interrogation de la base de données pour extraire les CDR se rapportant au compte prépayé et aux montants de leurs frais respectifs qui ont été reçus dans ledit intervalle de temps (706),
• le calcul d'un montant préliminaire global des frais des CDR extraits se rapportant au compte prépayé (712),
• la modification des CDR extraits se rapportant au compte prépayé selon des règles de tarification se rapportant au compte prépayé (707),
• la génération d'un enregistrement de l'événement se rapportant au compte prépayé, l'enregistrement de l'événement se rapportant au compte prépayé comprenant les CDR modifiés se rapportant au compte prépayé et au montant préliminaire global des frais (708), et
• l'envoi de l'enregistrement de l'événement se rapportant au compte prépayé vers le système de tarification en temps réel à commande événementielle (709) ;
le système de tarification en temps réel à commande événementielle étant en outre configuré pour réaliser les étapes suivantes en réponse à la réception de l'enregistrement de l'événement se rapportant au compte prépayé en provenance du système de traitement par lots :
• l'introduction des CDR modifiés compris dans l'enregistrement de l'événement reçu se rapportant au compte prépayé dans le composant de tarification pour déterminer un montant final global des frais pour les CDR modifiés compris dans l'enregistrement de l'événement se rapportant au compte prépayé (702),
• la mise à jour d'un crédit restant d'un solde de compte du compte prépayé en fonction de la différence entre le montant préliminaire global et le montant final global des frais (703), et
• l'envoi d'un message de facturation se rapportant au compte prépayé vers le système de traitement par lots comprenant le montant final global des frais (704).

2. Système de télécommunication cellulaire numérique mobile selon la revendication 1, dans lequel le système de traitement par lots est en outre configuré pour réaliser les étapes suivantes à la fin d'un cycle de facturation du compte post payé :
• l'interrogation de la base de données pour extraire les CDR se rapportant au compte post payé reçus au cours du cycle de facturation (612),
• la modification des CDR extraits se rapportant au compte post payé en fonction de règles de facturation se rapportant au compte post payé (618),
• la génération d'un enregistrement de l'événement se rapportant au compte post payé, l'enregistrement de l'événement comprenant les CDR modifiés se rapportant au compte post payé (613), et
• l'envoi de l'enregistrement de l'événement se rapportant au compte post payé vers le système de facturation en temps réel à commande événementielle(614) ;
le système de facturation en temps réel à commande événementielle étant en outre configuré pour réaliser les étapes suivantes en réponse à la réception de l'enregistrement de l'événement se rapportant au compte post payé en provenance du système de traitement par lots (616) :
• l'introduction des CDR modifiés compris dans l'enregistrement de l'événement reçus se rapportant au compte post payé dans le composant de tarification pour déterminer un montant global des frais pour les CDR compris dans l'enregistrement de l'événement (617), et
• l'envoi d'un message de facturation se rapportant au compte prépayé vers le système de traitement par lots comprenant le montant global des frais (619).

3. Système de télécommunication cellulaire numérique mobile selon l'une quelconque des revendications précédentes, dans lequel le système de tarification en temps réel à commande événementielle est en outre configuré pour réaliser les étapes suivantes en réponse à la réception du CDR (606) en provenance du composant de réseau pour le service de télécommunication proposé à l'utilisateur (510, 511) si le CDR reçu se rapporte au compte prépayé de l'utilisateur et si le crédit restant du solde de compte du compte prépayé est en dessous d'un premier seuil :
∘ la génération d'un message d'interruption pour l'interruption du service de télécommunication (603), et
∘ l'envoi du message d'interruption au composant de réseau (605).

4. Système de télécommunication cellulaire numérique mobile selon la revendication 2, dans lequel le système de tarification en temps réel à commande événementielle est en outre configuré pour réaliser les étapes suivantes en réponse à la réception du CDR en provenance du composant de réseau pour le service de télécommunication proposé à l'utilisateur si une qualité de service (QoS) du service de télécommunication dépend d'un historique d'utilisation du service de télécommunication par l'utilisateur :
• l'extraction de l'information d'utilisation à partir du CDR reçu (622),
• la mise à jour d'un seul ou de plusieurs comptes en utilisant l'information d'utilisation extraite, le ou les comptes étant indicateur(s) de l'historique du service de télécommunication (623),
• la génération d'un message QoS en accord avec l'information stockée dans le ou les comptes (624), et
• l'envoi du message QoS vers le composant de réseau (625) ;
dans lequel le système de traitement par lots est en outre configuré pour réaliser l'étape suivante à la fin du cycle de facturation du compte post payé ou en réponse à la réception de la demande sur la tarification pour facturer le compte prépayé :
• l'envoi d'un message de réinitialisation du compteur vers le système de facturation en temps réel à commande événementielle ;
dans lequel le système de facturation en temps réel à commande événementielle est en outre configuré pour réaliser les étapes suivantes :
• la réception du message de réinitialisation du compteur;
• en réponse à la réception du message de réinitialisation du compteur, la réinitialisation du ou des compteurs.

5. Système de télécommunication cellulaire numérique mobile selon la revendication 2 ou la revendication 4, dans lequel le système de traitement par lots est en outre configuré pour réaliser l'étape de :
• surveillance du volume des données transmises par unité de temps depuis le système de tarification en temps réel à commande événementielle vers le système de traitement par lots, où les données comprennent les CDR transférés, où l'envoi de l'enregistrement de l'événement se rapportant au compte post payé vers le système de tarification en temps réel à commande événementielle est réalisé quand le volume des données transmises par unité de temps est en dessous de la valeur d'un second seuil, où l'envoi de l'enregistrement de l'événement qui se rapporte au compte prépayé vers le système de tarification en temps réel à commande événementielle est réalisé quand le volume des données transmises par unité de temps est en dessous de la valeur d'un troisième seuil.

6. Système de télécommunication cellulaire numérique mobile selon l'une quelconque des revendications précédentes, dans lequel la modification des CDR extraits se rapportant au compte prépayé en fonction des règles de tarification se rapportant au compte prépayé comprend les étapes suivantes :
∘ l'identification des CDR, les CDR extraits de même type se rapportant au compte prépayé, et
∘ la génération d'un CDR agrégé pour tous les CDR identifiés se rapportant au compte prépayé en fonction de l'au moins une des règles de tarification se rapportant au compte prépayé, où le CDR agrégé est l'un des CDR modifiés se rapportant au compte prépayé.

7. Système de télécommunication cellulaire numérique mobile selon l'une quelconque des revendications 2 à 6 précédentes, dans lequel la modification des CDR extraits se rapportant au compte post payé selon les règles de tarification se rapportant au compte post payé comprend les étapes suivantes :
∘ d'identification des CDR, les CDR extraits de même type se rapportant au compte post payé, et
∘ la génération d'un autre CDR agrégé pour tous les CDR identifiés se rapportant au compte post payé en fonction de l'au moins une des règles de tarification se rapportant au compte post payé, où l'autre CDR agrégé est l'un des CDR modifiés se rapportant au compte post payé.

8. Système de télécommunication cellulaire numérique mobile selon l'une quelconque des revendications précédentes, le système de télécommunication cellulaire numérique mobile comprenant en outre un serveur de base de données (503) pour stocker les comptes prépayés et les comptes post payés, dans lequel chacun parmi plusieurs parmi les comptes post payés comprend une liste de services respectifs des services de télécommunication à proposer par l'unique composant ou plusieurs composants de réseau à un utilisateur ayant le compte post payé en question parmi plusieurs comptes post payés, une information de tarification respective et des règles pour déterminer les montant des frais pour les CDR générés se rapportant à l'utilisation des services de télécommunication de la liste des services du compte post payé en question parmi plusieurs des comptes post payés, une information du cycle de facturation respectif déterminant un calendrier du cycle de facturation du compte post payé en question parmi plusieurs des comptes post payés, où chacun parmi plusieurs des comptes prépayés comprend une liste des services respectifs des services de télécommunication à proposer par l'unique composant ou plusieurs composants de réseau à un utilisateur ayant un compte prépayé en question parmi plusieurs comptes prépayés et une information de tarification respective et des règles pour déterminer les montants des frais pour les CDR générés se rapportant à l'utilisation des services de télécommunication de la liste des services du compte post payé en question parmi plusieurs comptes post payés,
dans lequel le serveur de la base de données est configuré pour réaliser les étapes :
• d'envoi de la liste des services vers le composant ou les composants de réseau respectifs,
• d'envoi de l'information de tarification vers le système de tarification en temps réel à commande événementielle respectif,
• d'envoi de l'information du cycle de facturation et des règles de tarification vers le système de traitement des lots, et
• d'envoi de la demande de tarification pour facturer le compte prépayé ;
dans lequel le composant de réseau est configuré pour réaliser les étapes de :
• réception de la liste des services en provenance du serveur de la base de données,
• de stockage de la liste des services reçue, et de
• mise à disposition des services de la liste reçue pour un utilisateur ayant soit le compte post payé, soit le compte prépayé comprenant la liste des services stockés ;
dans lequel le système de tarification en temps réel à commande événementielle est en outre configuré pour réaliser les étapes de :
• réception de l'information de tarification en provenance du serveur de la base de données,
• de stockage de l'information de tarification reçue, où le composant de tarification est configuré pour facturer le CDR introduit en fonction de l'information de tarification stockée ;
dans lequel le système de traitement par lots est en outre configuré pour réaliser les étapes de :
• réception de l'information du cycle de facturation et des règles de tarification en provenance du serveur de la base de données,
• de réception de la demande de tarification vers le compte prépayé, et de
• stockage de l'information du cycle de facturation reçue et des règles de tarification reçues.

9. Système de télécommunication cellulaire numérique mobile selon l'une quelconque des revendications précédentes, le système de télécommunication cellulaire numérique mobile comprenant en outre d'autres systèmes de tarification en temps réel à commande événementielle, dans lequel le composant de réseau est configuré pour envoyer les CDR vers le système de tarification en temps réel à commande événementielle, dont le couplage de communication des données au composant de réseau a le temps d'attente du transfert des données le plus faible par rapport à n'importe quel autre système de tarification en temps réel à commande événementielle, où un temps d'attente de transfert des données d'un couplage de communication des données entre le système de traitement par lots et le système de tarification en temps réel à commande événementielle, pour lequel le composant de réseau est configuré pour envoyer les CDR, est plus élevé que le temps d'attente de transfert des données du couplage de communication des données utilisé pour l'envoi des CDR.

10. Procédé mis en oeuvre par ordinateur (620, 615) pour le traitement des enregistrements des détails d'appels (CDR) dans un système de télécommunication cellulaire numérique mobile (514) comprenant un composant de réseau (505, 506, 507, 508) configuré pour générer les CDR, un système de tarification en temps réel à commande événementielle (501, 502), et un système de traitement par lots (512), le système de tarification en temps réel à commande événementielle comprenant un composant de tarification ayant une interface pour l'introduction des CDR (501a, 502a) et qui est configuré pour facturer un CDR introduit, le procédé comprenant les étapes suivantes réalisées par le système de tarification en temps réel à commande événementielle en réponse à la réception d'un CDR en provenance du composant de réseau pour un service de télécommunication proposé à un utilisateur (511, 510) :
• le transfert du CDR reçu vers le système de traitement des lots (608) si le CDR reçu se rapporte à un compte post payé de l'utilisateur (606) ; et
• la réalisation des étapes suivantes si le CDR reçu se rapporte à un compte prépayé de l'utilisateur (600) :
∘ l'introduction du CDR reçu dans le composant de tarification pour déterminer le montant des frais pour le CDR reçu (601),
∘ l'ajout au CDR reçu du montant des frais retenu (700),
∘ après l'ajout au CDR reçu du montant des frais retenu, le transfert du CDR reçu vers le système de traitement par lots (701), et
∘ la facturation du montant des frais (602) sur le compte prépayé ; et
le procédé comprend en outre les étapes suivantes réalisées par le système de traitement par lots :
• la réception du CDR transféré (710), et le
• stockage du CDR reçu (711) dans une base de données (509) ;
le procédé comprenant en outre les étapes suivantes réalisées par le système de traitement par lots en réponse à la réception d'une demande de tarification (705) pour facturer le compte prépayé dans l'intervalle de temps indiqué dans la demande de tarification :
• l'interrogation de la base de données pour l'extraction des CDR se rapportant au compte prépayé et aux montants de leurs frais respectifs qui ont été reçus dans ledit intervalle de temps (706),
• le calcul d'un montant préliminaire global des frais des CDR extraits se rapportant au compte prépayé (712),
• la modification des CDR extraits se rapportant au compte prépayé en fonction des règles de tarification se rapportant au compte prépayé (707),
• la génération d'un enregistrement de l'événement se rapportant au compte prépayé, l'enregistrement de l'événement se rapportant au compte prépayé comprenant les CDR modifiés se rapportant au compte prépayé et au montant préliminaire global des frais (708), et
• l'envoi de l'enregistrement de l'événement se rapportant au compte prépayé vers le système de tarification en temps réel à commande événementielle (709) ;
le procédé comprenant en outre les étapes suivantes réalisées par le système de tarification en temps réel à commande événementielle en réponse à la réception de l'enregistrement de l'événement se rapportant au compte prépayé en provenance du système de traitement par lots :
• l'introduction des CDR modifiés compris dans l'enregistrement de l'événement reçu se rapportant au compte prépayé dans le composant de tarification pour déterminer le montant final global des frais des CDR modifiés compris dans l'enregistrement de l'événement se rapportant au compte prépayé (702),
• la mise à jour du crédit restant d'un solde de compte du compte prépayé en fonction de la différence entre le montant préliminaire global et le montant final global des frais (703), et
• l'envoi d'un message de facturation se rapportant au compte prépayé vers le système de traitement par lots comprenant le montant final global des frais (704).

11. Procédé mis en oeuvre par ordinateur selon la revendication 10, dans lequel le procédé comprend en outre les étapes suivantes réalisées par le système de traitement par lots à la fin d'un cycle de facturation du compte post payé :
• l'interrogation de la base de données pour l'extraction des CDR se rapportant au compte post payé reçu au cours du cycle de facturation (612),
• la modification des CDR extraits se rapportant au compte post payé en fonction des règles de tarification se rapportant au compte post payé (618),
• la génération d'un enregistrement de l'événement se rapportant au compte post payé, l'enregistrement de l'événement comprenant les CDR modifiés se rapportant au compte post payé (613), et
• l'envoi de l'enregistrement de l'événement se rapportant au compte post payé vers le système de tarification en temps réel à commande événementielle (614) ;
le procédé comprenant en outre les étapes suivantes réalisées par le système de tarification en temps réel à commande événementielle en réponse à la réception de l'enregistrement de l'événement se rapportant au compte post payé en provenance du système de traitement par lots (616) :
• l'introduction des CDR modifiés compris dans l'enregistrement de l'événement reçu se rapportant au compte post payé dans le composant de tarification pour déterminer le montant global des frais pour les CDR compris dans l'enregistrement de l'événement (617), et
• l'envoi d'un message de facturation se rapportant au compte prépayé vers le système de traitement par lots comprenant le montant global des frais (619).

12. Procédé mis en oeuvre par ordinateur selon l'une quelconque des revendications 10 ou 11, le procédé comprenant en outre les étapes suivantes réalisées par le système de tarification en temps réel à commande événementielle en réponse à la réception du CDR (606) en provenance du composant de réseau pour le service de télécommunication proposé à l'utilisateur (510, 511) si le CDR reçu se rapporte au compte prépayé de l'utilisateur et si le crédit restant du solde de compte du compte prépayé est en dessous d'un premier seuil :
∘ la génération d'un message d'interruption pour l'interruption du service de télécommunication (603), et
∘ l'envoi du message d'interruption vers le composant de réseau (605).

13. Procédé mis en oeuvre par ordinateur selon la revendication 11, le procédé comprenant en outre les étapes suivantes réalisées par le système de tarification en temps réel à commande événementielle en réponse à la réception du CDR en provenance du composant de réseau pour le service de télécommunication proposé à l'utilisateur si une qualité de service (QoS) du service de télécommunication dépend d'un historique d'utilisation du service de télécommunication par l'utilisateur :
• l'extraction de l'information d'utilisation en provenance du CDR reçu (622),
• la mise à jour du ou des compteurs en utilisant l'information d'utilisation extraite, le ou les compteurs étant indicateur(s) de l'historique d'utilisation du service de télécommunication (623),
• la génération d'un message QoS en accord avec l'information stockée dans le ou les compteurs (624), et
• l'envoi du message QoS vers le composant de réseau (625) ;
le procédé comprenant en outre les étapes suivantes réalisées par le système de traitement par lots à la fin du cycle de facturation du compte post payé ou en réponse à la réception de la demande de tarification pour facturer le compte prépayé :
• l'envoi d'un message de réinitialisation du compteur vers le système de tarification en temps réel par commande événementielle ;
le procédé comprenant en outre les étapes suivantes réalisées par le système de tarification en temps réel à commande événementielle :
• la réception du message de réinitialisation du compteur;
• en réponse à la réception du message de réinitialisation du compteur, la réinitialisation du ou des compteurs.

14. Procédé mis en oeuvre par ordinateur selon l'une quelconque des revendications 11 ou 13, le procédé comprenant en outre les étapes suivantes réalisées par le système de traitement par lots :
• la surveillance du volume des données transmises par unité de temps à partir du système de tarification en temps réel à commande événementielle vers le système de traitement par lots, dans lequel les données comprennent les CDR transférés, où l'envoi de l'enregistrement de l'événement se rapportant au compte post payé vers le système de tarification en temps réel à commande événementielle est réalisé quand le volume des données transmises par unité de temps est en dessous de la valeur d'un second seuil, où l'envoi de l'enregistrement de l'événement se rapportant au compte prépayé vers le système de tarification en temps réel à commande événementielle est réalisé quand le volume des données transmises par unité de temps est en dessous de la valeur d'un troisième seuil.

15. Support lisible par ordinateur sur lequel est stocké un code exécutable par ordinateur pour l'exécution par les processeurs de l'ordinateur qui commandent un système de télécommunication cellulaire numérique mobile, où l'exécution des instructions du code exécutable amène les processeurs de l'ordinateur à exécuter le procédé mis en oeuvre par ordinateur selon les revendications 10 à 14 sur le système de télécommunication cellulaire numérique mobile.
